# EUROPÄISCHE PATENTSCHRIFT

(11) **EP 3 176 395 B1**
(45) Veröffentlichungstag und Bekanntmachung des Hinweises auf die Patenterteilung: **12.09.2018**
(21) Anmeldenummer: 16196526.4
(22) Anmeldetag: 31.10.2016
(51) Int. Cl.: F01N 3/021, F01N 3/28, F01N 3/10

(54) **TRAGKÖRPER FÜR PARTIKELABSCHEIDER SOWIE VERFAHREN ZU SEINEM BEREICHSWEISEN BELOTEN**
SUPPORTS FOR PARTICLE SEPARATOR AND METHOD FOR LOCATION-SPECIFIC SOLDERING
SUPPORT DE SÉPARATEUR DE PARTICULES ET PROCÉDÉ D'APPLICATION PARTIELLE DE MATÉRIAU DE BRASAGE

(30) Priorität: 02.11.2015 DE 102015118693
(43) Veröffentlichungstag der Anmeldung: 07.06.2017
(73) Patentinhaber: Oberland Mangold GmbH, 82438 Eschenlohe (DE)
(72) Erfinder: Mangold, Matthias, 82438 Eschenlohe (DE); Mangold, Christian, 82467 Garmisch-Partenkirchen (DE); Knab, Christian, Garmisch-Partenkirchen (DE)
(74) Vertreter: Alber, Norbert

(56) Entgegenhaltungen:
- EP-A1- 0 213 435
- DE-A1-102004 058 285
- DE-A1-102008 011 261

## Beschreibung

### I. Anwendungsgebiet

Die Erfindung betrifft einen Tragkörper für Partikelabscheider oder Katalysatoren, wie sie im Abgasstrang eines Verbrennungsmotors, insbesondere eines Kraftfahrzeug-Verbrennungsmotors, häufig verwendet werden.

### II. Technischer Hintergrund

Derartige Tragkörper müssen dem durchströmenden Abgas einerseits eine hohe Oberfläche als Reaktionsfläche bieten, daneben weitere Erfordernisse je nach Anwendungsfall, z. B. Umlenkung oder Verwirbelung der Abgasströme.

Deshalb besteht ein solcher Tragkörper in der Regel aus mehreren strukturierten, sehr dünnen, also mit einer Dicke von meistens unter **100** µm, Blechfolien aus Edelstahl, die lagenweise übereinander liegen, gegebenenfalls mit Zwischenlagen aus ebenen, analog dünnen glatten Blechfolien, so dass eine Vielzahl von zwischen den Blechfolien verlaufenden frei durchgängigen Kanälen gebildet wird, durch die das Abgas hindurch strömen kann, und deren Wände in Summe die gewünschte große Oberfläche bieten.

Diese Vielzahl von Lagen, die in der Summe Matrix genannt wird, füllt dabei das Innere eines umgebenden Gehäuses, meist eines Rohrstückes, aus, welches die notwendige mechanische Stabilität bietet und - zusammen mit gegebenenfalls an das Rohrstück anschließenden stirnseitigen Konus-Endstücken - die Verschraubung mit den angrenzenden Teilen des Abgasstranges ermöglicht.

In einer Ausführungsform (Spiralform) wird die eine oder zwei verschiedenen Sorten von Blechfolien gemeinsam gewickelt zu einem zylindrischen Wicklungskörper, der anschließend in das umgebende Rohrstück eingeschoben wird, was sehr passgenau und insbesondere mit Übermaß erfolgen muss, da keine randseitigen, unbeabsichtigten Freiräume zwischen Matrix und Rohrstück entstehen sollen.

In einer anderen Ausführungsform (S-Form) wird je ein Stapel solcher Blechfolien um eine Klapp-Achse, die meist parallel zur Richtung der Kanäle verläuft, zu einem U-förmigen Paket geklappt, und zwei oder drei solcher Pakete, mit der Klapp-Stelle des Paketes zum Zentrum hinweisend, symmetrisch angeordnet in das Gehäuse, etwa das Rohrstück, eingeschoben, wobei die frei auslaufenden Enden des U-förmigen Paketes bogenförmig und sich fast tangential annähernd in Richtung zum außen umlaufenden Gehäuse verlaufen.

Die einzelnen Blechfolien werden zueinander sowie die gesamte Matrix gegenüber dem Rohrstück durch Verlöten fixiert.

Da die Blechfolien und damit die gesamte Matrix aufgrund der hohen Temperaturschwankungen zwischen Betriebszustand und Nicht-Betriebszustand starken Wärmedehnungen unterworfen werden, ist es bekannt, dass die Verlötung sämtlicher Kontaktstellen zwischen den Blechfolien und auch zu dem umgebenden Rohrstück hin eine zu starre Struktur ergibt, und bei auftretenden Temperaturdehnungen Lötstellen abreißen können.

Dadurch können sich Teile der Matrix lösen oder verschieben, was dann aufgrund der im Betrieb auftretenden Schwingungen zur Beschädigung oder gar Zerstörung der Matrix führen kann.

Aus diesem Grund wurde bereits versucht, nur einen Teil der Kontaktstellen zu verlöten.

Das Verlöten erfolgt in aller Regel erst nach dem Einschieben der erstellten Matrix in das Rohrstück.

Dabei wird von wenigstens einer der Stirnseiten des Gehäuses her ein Lot-Fluid in die Kanäle der Matrix eingebracht.

Das Lot-Fluid kann eine Flüssigkeit sein, die
- entweder aus einem flüssigen Kleber und darin enthaltenen Lotpartikeln, meist Lot-Kugeln, besteht
- oder nur aus einem flüssigen Kleber, an dem dann in einem weiteren Arbeitsgang die Lot-Partikel zur Anhaftung gebracht werden,
oder es können selbst haftende Lotpartikel in Form eines fließfähigen Schüttgutes solcher Lotpartikel sein.

Es ist bereits bekannt, nur in einen Teil dieser Kanäle Lotmaterial, beispielsweise die Lot-Kugeln, einzubringen, die sich dort in den Zwickeln, z.B. zwischen der strukturierten Blechfolie und der glatten Blechfolie, ansammeln so dass sich beim anschließenden Lötvorgang, also dem Erhitzen, die Lotkugeln schmelzen und vor allem in den Zwickeln die beiden Blechfolien miteinander verlöten.

Aus der DE 102008011261 A1 ist es bekannt, bei einer Querschnittsbetrachtung einer Matrix nur relativ weit voneinander entfernte einzelne Kontaktstellen - keine Bereiche - zwischen einer strukturierten Blechlage und einer daran anliegenden Blechlage der Matrix zu verlöten und so anzuordnen, dass diese Lötstellen bei axialer Betrachtung auf gekrümmten Verbindungslinien liegen. Die Verlötung wird nur in den stirnseitigen Endbereich der Matrix vorgenommen.

Aus der DE 102004058285 A1 ist es bekannt, an einem derselben Blechlage ausgebildete Bereiche von Verbindungsstellen miteinander zu verlöten, indem in diesen Bereichen beispielsweise Lötfolie aufgebracht wird. Bereiche, in denen alle Kontaktstellen auch gelötet werden, und die sich über mehrere Lagen hinweg erstrecken, sind dieser Schrift nicht zu entnehmen.

Als nächstreichender Stand der Technik zeigt die EP 0213435 eine Matrix, bei der bei stirnseitiger Betrachtung Bereiche, die sich über mehrere Kontaktstellen und Blechlagen hinweg erstrecken, verlötet werden. Diese Lotbereiche können bei stirnseitiger Betrachtung auch die Form gekrümmter Streifen aufweisen.

### III. Darstellung der Erfindung

### a) Technische Aufgabe

Es ist daher die Aufgabe gemäß der Erfindung, eine solche bereichsweise Belotung der Matrix zu ermöglichen, dass der verlötete Tragkörper temperaturbedingte Ausdehnungen besonders gut verkraften kann.

### b) Lösung der Aufgabe

Diese Aufgabe wird durch die Merkmale der Ansprüche 1 und 17 gelöst. Vorteilhafte Ausführungsformen ergeben sich aus den Unteransprüchen.

Der Grundgedanke der Erfindung besteht darin, die Anordnung der beim fertigen Tragkörper verlöteten - in Verlaufsrichtung der Kanäle betrachteten -, Bereiche, also analog der bei der Belotung zu belotenden Bereiche - für die Zwecke der vorliegenden Anmeldung Lotbereich genannt - so zu wählen, dass bei temperaturbedingter Dehnung Spannungen lotrecht zur Hauptebene der Lagen der verlöteten Blechfolien vermieden werden.

**In einem Lotbereich sollen vorzugsweise alle darin liegenden Kontaktstellen zwischen den Blechfolien und vorzugsweise auch die Oberflächen der Blechfolien abseits der Kontaktstellen belotet sein. Dementsprechend sollen vorzugsweise nach dem Beloten auch alle im Lotbereich liegenden Kontaktstellen verlötet sein.**

Dadurch werden bei temperaturbedingten Ausdehnungen der Matrix, - die in aller Regel wesentlich stärker sind und vor allem schneller einsetzen als die temperaturbedingte Dehnung des wesentlich dickeren Rohrstückes - die dadurch vor allem in radialer Richtung der insbesondere spiralförmig gewickelten Matrix auftretenden Spannungen geändert in tangentiale, in Umfangsrichtung gerichtete Spannungen und Kräfte, die ein begrenztes Nachgeben der Matrix in dieser Umfangsrichtung ermöglichen aufgrund der spezifischen Anordnung der zweidimensionalen Lotbereiche und dreidimensionalen Belotungsräume.

Dies wird erreicht, indem - betrachtet in der Aufsicht auf die Stirnfläche der Matrix, in der die Matrixkanäle enden oder einer dazu parallelen Querebene - die Lotbereiche hinsichtlich ihrer Größe und Positionierung so gewählt werden, dass pro Lage der aneinander anliegenden Blechfolien - oder bei gewickelten Matrix Blechfolien-Abschnitte - zwar in jeder Lage mindestens eine der bei zweidimensionaler Betrachtung der Stirnfläche oder einer dazu parallel liegenden Querfläche vorhandenen Kontaktstellen zwischen zwei Blechfolien oder - bei mehrlagiger Wicklung - aneinanderliegender Blechfolienabschnitte derselben Blechfolie -, bei dreidimensionaler Betrachtung der sich in Tiefenrichtung erstreckenden Kontaktstreifen, belotet und anschließend verlötet ist.

Alternativ kann die belotete Kontaktstelle nicht zwingend in dieser gewählten Querebene liegen, sondern in Kanalrichtung auch vor oder hinter dieser Querebene, also in der durch diese Kontaktstelle in Kanalrichtung verlaufenden Kontaktstreifen.

Alternativ oder zusätzlich kann die Obergrenze darin bestehen, dass eben bei weitem nicht alle Kontaktstellen bzw. Kontaktstreifen pro Lage, sondern höchstens **10** %, besser höchstens **5** %, besser höchstens **2** %, besser höchstens **1** % aller Kontaktstellen bzw. Kontaktstreifen belotet werden und anschließend verlötet werden. Dies gilt insbesondere für eine Ringfläche auf der Querfläche, die eine im Zentrum liegende Zentrumsfläche und eine entlang des Außenumfanges, insbesondere konzentrisch zur Ringfläche, umlaufende Randfläche nicht beinhaltet.

Dabei sollte die größte Erstreckung der Zentrumsfläche maximal dem achtfachen, besser maximal dem fünffachen, der Dicke einer Lage entsprechen und/oder in absoluten Werten maximal **20** mm, besser maximal **15** mm, besser maximal **12** m betragen.

Die außen umlaufende Randfläche sollte eine Randbreite quer zu ihrer Verlaufsrichtung aufweisen, die maximal dem achtfachen, besser maximal dem Fünffachen, besser maximal dem dreifachen der Dicke einer Lage entspricht und/oder in absoluten Werten maximal **15** mm, besser maximal nur **10** mm, besser maximal nur **5** mm breit ist.

Bei einer spiralförmig gewickelten Matrix ist eine vollständige Lage ein sich über **360** Grad erstreckendendes Teilstück der Blechfolie oder der beiden gemeinsam gewickelten Blechfolien.

Hinsichtlich der Gestaltung der Lotbereiche können ein oder auch mehrere, endliche Lotbereiche vorhanden sein, die nicht miteinander verbunden sind, oder auch ein oder mehrere endlose, zum Beispiel in sich ringförmig geschlossene, Lotbereiche.

Dies muss betrachtet über die gesamte Erstreckung der Matrix in Rohrrichtung, der Verlaufsrichtung des rohrförmigen Gehäuses, an mehreren Stellen in Rohrrichtung, oder über einen erheblichen Teil der Länge in Rohrrichtung, insbesondere mindestens **50** Prozent, besser mindestens **75** Prozent, besser mindestens **90** Prozent, insbesondere die gesamte Länge, gelten:
Denn es genügt nicht, wenn innerhalb eines Kontaktstreifens zwischen zwei Blechfolien nur an einer Stelle in Verlaufsrichtung dieses Kontaktstreifens eine Verlötung zwischen den beiden Blechfolien vorhanden ist, denn dies verhindert noch nicht die Relativverschiebung zwischen diesen beiden Blechfolien an einer anderen Stelle.

Um das richtige Ausmaß einer Belotung zu erreichen, definiert man - insbesondere bei einer spiralförmigen Matrix - einen Korridor in einer Querebene, insbesondere der mit der einen Stirnfläche identischen, Querebene der Matrix, der sich über die gesamte Quer-Erstreckung der Matrix lotrecht zur Verlaufsrichtung der Lagen erstreckt und eine Breite vom vierfachen der Dicke einer Lage. Wenn innerhalb des Korridors höchstens **7**, besser höchstens nur fünf aufeinanderfolgende Lagen verlötete und somit zuvor belotete Kontaktstellen in diesem Korridor vorhanden sind, ergibt dies die gewünschte flexible, aber dennoch ausreichend stabile Matrix.

Für die Zwecke der vorliegenden Erfindung wird als Dicke einer Lage der Abstand von Mitte zu Mitte zweier identischer Blechfolien lotrecht zu deren Hauptebene verstanden, also bei einer Abfolge von z.B. gewellter Blechfolie und ebener Blechfolie abwechselnd aufeinander, der Abstand von Mitte der Dicke der glatten Blechfolie zur Mitte der Dicke der nächsten glatten Blechfolie.

Für die Zwecke der nachfolgenden Erläuterungen werden beim fertiggestellten Tragkörper verlötete Bereiche gleichgestellt mit vor dem Lötvorgang beloteten Bereichen, weshalb im Folgenden immer noch von beloteten Bereichen, also dem Zustand des Tragkörpers nach dem Beloten und vor dem Lötvorgang, die Rede ist.

Die nach dem Beloten an den Blechfolien anhaftenden Lot-Partikel werden beim Verlöten aufgeschmolzen, verlaufen etwas und ergeben danach ein aus der Schmelze erstarrtes, flächig durchgehendes Lötmaterial, welches vor allem in den Zwickeln zwischen der gewellten und der glatten Blechfolie oder anderen Eckbereichen anhaftet, aber an in etwa den gleichen Bereichen, in denen zuvor die Lot-Partikel anhafteten.

Der Tragkörper gemäß der vorliegenden Erfindung beschreibt daher bezüglich der Lotbereiche sowohl den beloteten, aber noch nicht verlöteten, als auch den bereits fertig verlöteten Zustand, da in den beiden Zuständen die beloteten Bereiche und die verlöteten Bereiche etwa identisch sind.

Durch die beschriebene Verteilung der Lotbereiche wird erreicht, dass der fertig verlötete Tragkörper einerseits ausreichend eigenstabil ist, um den Belastungen, insbesondere mechanischen Belastungen, im Betrieb gewachsen zu sein, andererseits ausreichend elastisch, um den wärmebedingten Temperaturdehnungen und Temperatur-Schrumpfungen ohne Beschädigung, insbesondere der Lötstellen, Stand zu halten.

Dieses Ziel kann auch dadurch erreicht werden - oder durch zusätzliche Einhaltung dieser Bedingung - dass der wenigstens eine, in der Querebene, insbesondere einer Stirnfläche, ausgewählte Lotbereich streifenförmig ausgebildet ist und die Verlaufsrichtung des streifenförmigen Lotbereiches in der Querebene gekrümmt ist, zumindest innerhalb der oben definierten Ringfläche innerhalb der Querfläche.

Bei einem endlichen streifenförmigen Lotbereich bedeutet dies, dass die Länge des streifenförmigen Lotbereiches länger ist als die gerade Verbindungs-Strecke zwischen dem Anfang und dem Ende des streifenförmigen Lotbereiches.

Um das gewünschte Ziel zu erreichen, sollte der streifenförmige Lotbereich quer zu seiner Verlaufsrichtung eine Breite aufweisen, die
- maximal dem **10**-fachen, besser maximal dem **7**-fachen, besser maximal nur dem **5**-fachen der Dicke einer Lage - gemessen quer zur Verlaufsrichtung der Lage - entspricht
   und/oder
- mindestens einfach, besser mindestens zweifach, besser mindestens dreifach, besser mindestens vierfach so groß ist wie die dicke einer Lage und/oder
- zwischen **1,5** %und **15** %, besser zwischen **3** %und **5** %, der gemittelten Quererstreckung, insbesondere des Durchmessers, der Querfläche beträgt.

Zu bevorzugen ist, dass die Verlaufsrichtung des streifenförmigen Lotbereiches über den wesentlichen Teil ihrer Länge, also mindestens **70** %, besser mindestens **80** %, besser mindestens **90** %, eine Richtungskomponente aufweist, die nicht parallel zur Verlaufsrichtung der am betrachteten Punkt des streifenförmigen Lotbereiches diesen kreuzenden Lage von Blechfolien verläuft.

Der sich an einem betrachteten Punkt innerhalb des Verlaufes des Lotbereiches - kleinere von beiden - Zwischenwinkeln zwischen den Verlaufsrichtungen des Lotbereiches und der Lage sollte - zumindest innerhalb der Ringfläche - dabei
- mindestens **10**°, besser mindestens **15**°, besser mindestens **20°** betragen, oder/und
höchstens **40**°, besser höchstens **35**°

Durch den Zwischenwinkel einerseits und die Breite des streifenförmigen Lotreiches andererseits wird somit die Länge des beloteten Lagenabschnittes in der den Lotbereich kreuzenden Lage der Blechfolien bestimmt, die unter anderem gesteuert werden soll.

In einer Querebene der Matrix kann nur ein einziger streifenförmiger Lotbereich vorhanden sein, oder es können auch mehrere streifenförmige, somit jeweils endliche, Lotbereiche vorhanden sein.

Der einzelne gekrümmte Lotbereich soll per Definition keinen Knick aufweisen, also keine schlagartige Änderung seiner Verlaufsrichtung, insbesondere nicht mit einem Radius, der kleiner ist als die Dicke einer Lage.

Ein Lotbereich kann aber aus mehreren knickfreien Lotbereichs-Abschnitten zusammengesetzt sein, die an einem Knick miteinander verbunden sind, und für die die vorstehenden Aussagen, die bezüglich des ganzen Lotbereichs getroffen wurden, ebenfalls zutreffend sollen.

So können sich beispielsweise mehrere knickfreie Lotbereich-Abschnitte sternförmig in einem Lotbereichs-Zentrum treffen, beispielsweise im Zentrum einer Stirnfläche oder einer anderen Querfläche der Matrix.

Die insbesondere streifenförmigen Lotbereiche können sich auch kreuzen und insbesondere - in Längsrichtung betrachtet - ein Gitter, also ein Tragwerk, bilden.

Ein solches Lotbereichs-Zentrum kann im geometrischen Zentrum und/oder im Schwerpunkt der Querfläche der Matrix liegen und/oder bei einer spiralförmig gewickelten Matrix im Wickelzentrum der Matrix.

Ein solcher Lotbereich-Abschnitt kann in seinem Verlauf die Richtung seiner Krümmung - also auf welcher Seite des streifenförmigen Lotbereiches der Mittelpunkt des Krümmungs-Radius liegt - ändern, auch mehrfach, vorzugsweise besitzt der knicklose Lotbereich-Abschnitt jedoch eine gleichbleibende Krümmungsrichtung.

Vorzugsweise stimmt bei einer spiralförmig gewickelten Matrix die Krümmungsrichtung des streifenförmigen Lotbereiches mit der Krümmungsrichtung der spiralförmig gewickelten Lagen der Matrix überein.

Vorzugsweise nimmt der Krümmungsradius des streifenförmigen Lotbereich-Abschnittes von einem weiter vom Außenrand der Querfläche der Matrix entfernten Punkt zu dem näher am Außenumfang der Matrix liegenden Punkt kontinuierlich ab.

Ein streifenförmiger Lotbereich kann auch ein ggf. vorhandener Lotbereichs-Ring, der sich entlang des Umfanges, insbesondere der Randfläche, der Matrix in der Querfläche, insbesondere der Stirnfläche der Matrix, erstreckt, der jedoch die vorgenannten Bedingungen nicht erfüllen muss.

Ein solcher Lotbereichs-Ring verlötet über den gesamten Außenumfang die Matrix mit dem umgebenden Rohrstück, was jedoch nicht bei allen Anwendungen oder auch Bauformen der Matrix erforderlich oder gewünscht ist.

Statt eines umlaufenden Lotbereichs-Ringes kann auch nur ein Lotbereichs-Ring-Segment vorhanden sein, welches sich nur über einen Teil des Umfanges der Matrix erstreckt, und insbesondere bei einer spiralförmigen Matrix die außenseitigen freien Enden der wenigstens einen spiralförmig gewickelten Lage der Matrix in Umfangsrichtung übergreift.

Bei der Auswahl der zur Betrachtung der Lotbereiche herangezogenen Querfläche wird vorzugsweise die Ebene der Stirnfläche selbst oder die unmittelbar darauf ins Innere der Matrix hinein, also in Tiefenrichtung, darauf folgende, Querfläche ausgewählt.

Auch eine Querfläche im Abstand der Dicke einer Lage von der Ebene der Stirnfläche aus beabstandet wird noch als unmittelbar nachfolgende Querebene gesehen.

Dies ist daher notwendig, da je nach gewähltem Belotungsverfahren, insbesondere bei Flutungs-Verfahren von der Stirnfläche der Kanäle her, die anhand der vorliegenden Erfindung beschriebenen Gestaltungen des wenigstens einen Lotbereiches unmittelbar an der Stirnfläche möglicherweise nicht zutreffen, da dort aufgrund verfahrensbedingter Verschmutzungen größere Bereiche der Matrix eine Verlötung zwischen den Blechfolien aufweisen können, jedoch nur über eine tief in die Matrix hinein von weniger als einer Halben oder gar einer Viertel Dicke einer Blechlage.

Eine häufige Form der Matrix ist eine zylindrische Matrix, die beidseits jeweils eine runde Stirnfläche aufweist, oder eine Matrix, die einen elliptische Querschnitt und damit auch Stirnfläche besitzt.

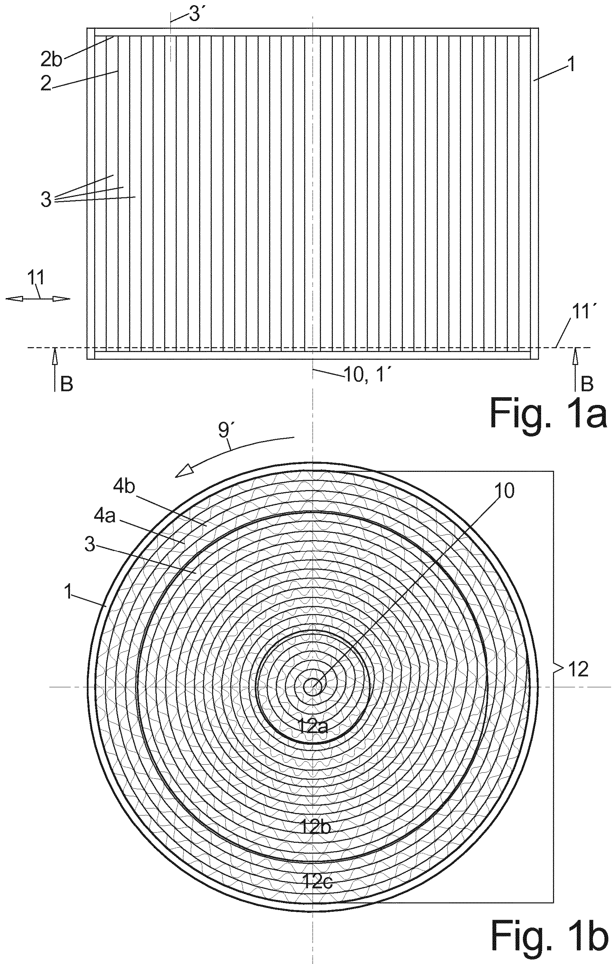

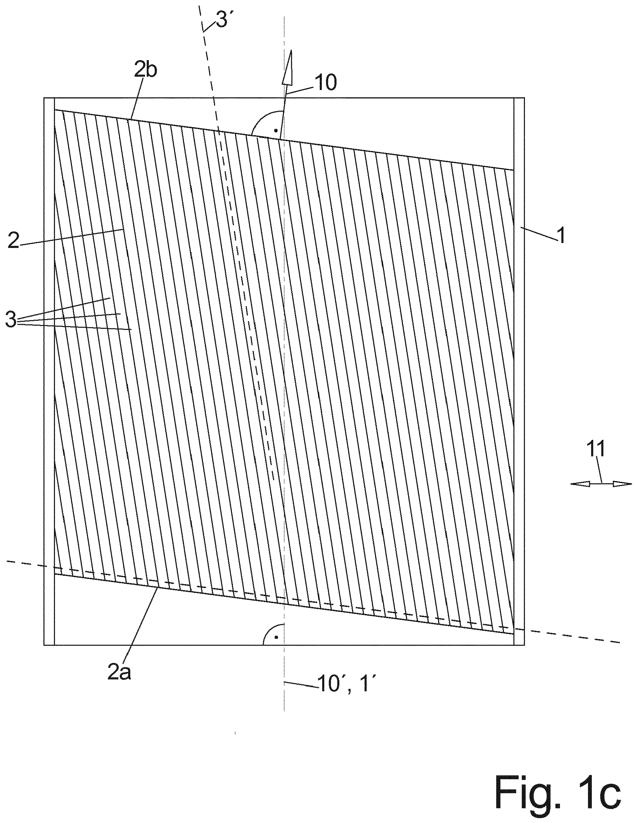

Eine solche Matrix wird meist erzielt durch Wickeln von einer oder zwei Blechfolien ineinander, wobei aufgrund der Struktur der Blechfolien häufig die Verlaufsrichtung der durch die gewickelten Folien entstehenden Matrixkanäle, die Kanalrichtung, parallel zur Wickelachse verläuft, sodass für die Zwecke der vorliegenden Anmeldung die Wickelachse mit der Kanalrichtung, und häufig auch der Rohrrichtung und /oder der Tiefenrichtung, der Lotrechten auf die Stirnfläche der z.B. zylindrischen Wicklung, übereinstimmt, aber eben nicht immer, wie anhand von Figur **1**c erläutert werden wird.

Bei dieser Gestaltung und Aufbau einer Matrix besteht der streifenförmige Lotbereich vorzugsweise aus mehreren knickfreien Lotbereichs-Abschnitten, die sich sternförmig in einem gemeinsamen Lotbereichs-Zentrum treffen.

Dieses Lotbereichs-Zentrum kann im Zentrum der kreisscheibenförmigen Querfläche, der Radialebene der Matrix, liegen und somit bei einer spiralförmig gewickelten Matrix im Zentrum, also auf der Wickelachse, der Matrix. Es sind jedoch auch Lösungen möglich, bei denen das Lotbereichs-Zentrum gezielt versetzt gegenüber dem Zentrum einer spiralförmig gewickelten Matrix ist.

Vorzugsweise besitzt bei dieser Bauform der Matrix ein streifenförmiger Lotbereich, oder bei der vorbeschriebenen Sternform die einzelnen knickfreien Lotbereichs-Abschnitte, eine über den gesamten Verlauf gleiche Krümmungsrichtung und insbesondere einen vom Lotbereich-Zentrum, also dem weiter innen liegenden Beginn eines Lotbereich-Abschnittes, Fisch aus kontinuierlich abnehmenden Krümmungsradius, sodass der Lotbereich-Abschnitt damit eine Spiralform besitzt, jedoch vorzugsweise sich über dem Umfangsbereich von weniger als **270**°, insbesondere weniger als **180**° erstreckt.

Vorzugsweise sind bei der erwähnten sternförmigen Gestaltung des Lotbereiches die einzelnen Lotbereich-Abschnitte identisch ausgebildet und gleichmäßig über den Umfang verteilt, also mit gleichmäßigen Zwischenwinkeln zueinander angeordnet.

Ein häufiger Fall ist eine Matrix, die durch spiralförmig gewickelte eine oder mehrere Blechlagen hergestellt ist, insbesondere um ein Zentrum in der Mitte des kreisförmigen Querschnittes der Matrix herum spiralförmig hergestellt ist.

Das richtige Ausmaß und die richtige Positionierung der Belotung kann hier dadurch definiert werden, dass in der Querfläche ein Korridor in der Querfläche festgelegt wird, in dem auch der geometrische Mittelpunkt, insbesondere den Schwerpunkt, der Querfläche liegt. Der Korridor kann in beliebiger Winkellage innerhalb der Querfläche verlaufe.

Ein solcher Korridor sollte parallel zueinander verlaufende, gerade Kanten besitzen und somit eine gleichmäßige Breite aufweisen. Bei einer Breite des vierfachen der Dicke einer Lage der Matrix sollten höchstens **10**, besser höchstens nur **7**, besser höchstens nur **5** jeweils aufeinanderfolgende Lagen eine belotete Kontaktstelle innerhalb dieses Korridors aufweisen.

Bei einer spiralförmigen Matrix sollte die Krümmungsrichtung der streifenförmigen Lotbereiche, oder insbesondere Lotbereichs-Abschnitte, vorzugsweise mit der Krümmungsrichtung der spiralförmig gewickelten Blechfolien übereinstimmen, vorzugsweise im jeweiligen radialen Abstand vom Zentrum der Matrix der Krümmungsradius des Lotbereiches jedoch größer als der der Lage der Blechfolien in diesem radialen Abstand sein.

Dies gilt auch für mehrere spiralförmig ineinander gewickelte U-förmige Blechlagen-Pakete, die symmetrisch um den Mittelpunkt der Querfläche herum angeordnet sind.

Ebenso sollte vorzugsweise der Zwischenwinkel zwischen den Verlaufsrichtungen des sich kreuzenden streifenförmigen Lotbereiches und der Lage, gemessen am Kreuzungspunkt, vom radial Inneren Ende des Lotbereiches oder knickfreien Lotbereich-Abschnittes zu dessen äußeren Ende hin fortlaufend abnehmen.

Am radial äußeren Ende des Lotbereiches oder Lotbereich-Abschnittes, insbesondere am äußeren Rand der Matrix, sollte der Zwischenwinkel vorzugsweise unter **5**° liegen und insbesondere gegen Null gehen oder Null erreichen, insbesondere durch asymptotische Annäherung der Verlaufsrichtung des Lotbereiches oder Lotbereich-Abschnittes, an die Verlaufsrichtung der Lage der Blechfolien.

Die bisherigen Aussagen betrafen die Lage der Anordnung der in einer Querebene, insbesondere nahe des oder an der Stirnfläche, positionierten wenigstens einen Lotbereiches.

Dieser wenigstens eine Lotbereich erstreckt sich jedoch in Tiefenrichtung der Matrix in diese hinein, ggfs. bis zur gegenüberliegenden Stirnfläche, wodurch sich wenigstens ein dreidimensionaler, in Tiefenrichtung sich erstreckender Belotungsraum ergibt, dessen Querschnitt der entsprechende wenigstens eine Lotbereich ist.

Dementsprechend besteht bei einer um die Tiefenrichtung aus gewellter Blechfolie und glatter Blechfolie gewickelten Matrix der Belotungsraum aus mehreren sich in Tiefenrichtung erstreckenden, stabförmigen Belotungszonen, denn bei der Belotung sammeln sich die Lotpartikel - und nach dem Verlöten das nach dem Aufschmelzen wieder erstarrte Lot - primär, quasi ausschließlich, im Zwickel zwischen z.B. der gewellten und der glatten Blechfolie und nicht über den gesamten Umfang des Kanal-Querschnittes, sodass sich dort viele Belotungszonen bilden, die sich in Tiefenrichtung erstrecken, und einen etwa dreieckigen Querschnitt besitzt.

An dieser Stelle darf nochmals explizit klargestellt werden, dass somit in dem einen oder mehreren vorhandenen Lotbereich und in dem sich von dort aus in Tiefenrichtung erstreckenden Belotungsraum nicht die gesamten vorhandenen Freiräume zwischen den Blechfolien mit Lotmaterial, insbesondere Lotpartikeln wie etwa Lotkugeln oder auch im verlöteten Zustand mit erstarrtem Lot gefüllt sind, denn dies würde ja einen erheblichen Anteil der Matrix-Kanäle für die Durchströmung von Abgasen unbrauchbar machen und verschließen. Die stabförmigen Belotungszonen mit etwa dreieckigem Querschnitt belegen in der Regel nur **5 - 10**% der Querschnittsfläche eines Matrix-Kanals.

In jeder der in Tiefenrichtung verlaufenden stabförmigen Belotungszonen sind nach dem Beloten - meist sehr viele - Lotpartikel wie etwa Lotkugeln vorhanden, jedoch stehen nicht alle Lotpartikel bzw. Lotkugeln zueinander in Kontakt, sodass vor allem in Tiefenrichtung nicht über die gesamte Länge der Belotungszone durchgehend Lotpartikel oder insbesondere Lotkugeln vorhanden sind, und somit die Belotungszone in Tiefenrichtung durchaus unbelotete Abschnitte aufweisen kann.

Vorzugsweise erstreckt sich jede Belotungszone über mehr als die Hälfte der Erstreckung der Matrix in Kanalrichtung, beginnend an einer oder jeweils einer der Stirnseiten. Dabei können die Lotpartikel nach dem Beloten in Kanalrichtung durchaus an einer oder mehreren stellen zueinander beanstandet angeordnet sein.

Bei einer spiralförmig gewickelten Matrix kann an Stelle des über den gesamten Umfang umlaufenden Lotbereich-Ringes nur ein Lotbereich-Ring-Segment vorhanden sein, welches dann allerdings in Umfangsrichtung so angeordnet ist, dass es das äußere Ende der spiralig gewickelten einen oder mehreren Lagen an Blechfolien, also den spiralig gewickelten Wickel an Blechfolien einerseits zusammenhält und andererseits gegenüber dem umgebenden Rohrstück fixiert.

Falls eine Matrix von beiden Stirnseiten her belotet wird in jeweils streifenförmigen Lotbereichen und von dort aus in Rohrrichtung sich in die Matrix hinein erstreckenden Belotungsräumen, so besteht eine Möglichkeit darin, die Lotbereiche an beiden Stirnflächen gleich zu gestalten, und insbesondere deckungsgleich anzuordnen.

Bei deckungsgleicher Anordnung können die sich durch Belotung in die Tiefe reichenden Belotungsräume von den beiden Stirnseiten aus gegenseitig erreichen, bei lediglich gleicher Gestaltung, aber nicht deckungsgleicher Anordnung, insbesondere hinsichtlich Drehlage um das Wickel-Zentrum herum, können sich die Lotbereiche der beiden Stirnseiten ggfs. nicht überschneiden.

Dann ist auch eine Überlappung der beiderseitigen Belotungsräume in Rohrrichtung möglich, ohne dass die beiderseitigen Belotungsräume zueinander in Kontakt geraten.

Hinsichtlich des **Verfahrens** zum Beloten wird die oben beschriebene Aufgabe dadurch erfüllt, dass bei dem bekannten Belotungs-Verfahren durch Einströmen eines Lot-Fluids in die Kanäle von der Stirnseite her die Stirnfläche, von der aus das Beloten erfolgen soll, mit einem - vorzugsweise die gesamte Stirnfläche bedeckenden - Abdeckstempel abgedeckt wird, und sich in dessen die Stirnfläche der Matrix kontaktierenden Kontaktfläche Lot-Nuten befinden, welche in ihrer Form den gewünschten Lotbereichen entsprechen.

Meist wird dann der Tragkörper mit auf der unteren Stirnfläche aufgesetztem Abdeckstempel in einen Bad-Behälter eingetaucht, in dem sich das Lot-Fluid befindet.

Sobald über entsprechende Verbindungskanäle in dem Abdeckstempel das Lot-Fluid, welches die Lotpartikel, wie etwa Lotkugeln, enthält oder ausschließlich von solchen fließfähigen Lotpartikeln wie etwa Lotkugeln gebildet wird, in diese Lot-Nutten gelangt oder gar gepresst wird, fließen diese Lotpartikel in die Matrix-Kanäle hinein, z.B. nach oben.

Um die Eindringtiefe in Kanalrichtung zu bestimmen, wird dies vorzugsweise bei nach unten gerichteter Stirnfläche, die von dem Abdeckstempel kontaktierend abgedeckt ist, durchgeführt, wobei sich der Tragkörper einschließlich des Abdeckstempels vorzugsweise in einem Bad bestehend aus dem Lot-Fluid befindet.

Dabei ist vorzugsweise der Innenumfang des Rohrstückes des Tragkörpers beim Eintauchen gegenüber dem Abdeckstempel abgedichtet, und vorzugsweise auch der Außenumfang des Rohrstückes gegenüber dem Innenumfang des Bad-Behälters, der dementsprechend die gleiche Innen-Kontur besitzt wie das Rohrstück an seinem Außenumfang und in welchem sich das Lot-Fluid befindet.

Dadurch kann des Lot-Fluid bei Bedarf auch unter Druck gesetzt werden und in die Matrix-Kanäle bis zur gewünschten Höhe hochgepresst werden, was aufgrund der häufig gegebenen Zähflüssigkeit des Lot-Fluids allein durch Aufsteigen bei entsprechend tiefem Eintauchen des Tragkörpers in das Bad aus Lot-Fluid in der Regel nicht oder nicht schnell genug folgt.

Ferner kann durch Verändern der Breite der Lot-Nut in ihrer Verlaufsrichtung gesteuert werden, in welchem Bereich der Kontur der Lot-Nut, also des Lotbereiches, dass Lot-Fluid mit geringerem Strömungswiderstand in die Matrix-Kanäle eintreten und dementsprechend dort auch weiter vordringen kann,, insbesondere höher aufsteigen kann, als in den Bereichen, in denen die Lot-nut schmaler ausgebildet ist.

### c) Ausführungsbeispiele

Ausführungsformen gemäß der Erfindung sind im Folgenden beispielhaft näher beschrieben. Es zeigen:
- Fig. **1**a, b:: einen Tragkörper mit spiralförmig gewickelter Matrix im unbeloteten Zustand im Längsschnitt sowie in der Stirnansicht,
- Fig. **1**c:: einen ähnlichenTragkörper im Längsschnitt,
- Fig. **2**a bis d:: Aufsichten auf eine Stirnfläche des Tragkörpers gemäß Figur 1b mit unterschiedlich gestalteten Lotbereichen,
- Fig. **3**a bis c:: Detailvergrößerungen aus Fig. 2a im unbeloteten, beloteten und verlöteten Zustand,
- Fig. **4**:: den Tragkörper gemäß Fig. **1**a im Längsschnitt beim Beloten.

Die **Figuren 1a, b** zeigen einen Tragkörper in einer Gestaltung, auf die die vorliegende Erfindung primär, jedoch nicht ausschließlich, anwendbar ist:
Wie die Aufsicht auf die Stirnfläche gemäß **Fig. 1b** oder eine dazu parallel zur Stirnfläche **2**a in Tiefenrichtung **10** in die Matrix **2** hinein verlagerten Querebene **11**', also bei einem symmetrischen Tragkörper eine Radialebene **11**', zeigt, besteht dabei die Matrix **2** aus einer gewellten Blechfolie **4**a und einer glatten Blechfolie **4**b, die gemeinsam spiralförmig um eine Wickelachse **10** gewickelt sind, die vorzugsweise parallel zur Kanalrichtung **3**' der dadurch zwischen den aneinander liegenden glatten und gewellten Blechfolien **4**a, b entstehenden Matrix-Kanälen **3** verläuft.

In der Ausführungsform der **Figuren 1a, b** verlaufen
- die Rohrrichtung **1',** also die Verlaufsrichtung des Rohrstück S eins,
- die Kanalrichtung **3'**, also die Verlaufsrichtung der Matrix-Kanäle **3**,
- die Wickelachse **10'** und
- die Tiefenrichtung **10** der Matrix **2**, also die Lotrechte auf eine der Stirnflächen **2**a, b,
parallel zueinander bzw. sind identisch.

Anhand eines Längsschnittes durch eine etwas andere Bauform des Tragkörpers wird anhand der **Figur 1c** erläutert, warum diese Richtungen in der Praxis nicht unbedingt parallel zueinander verlaufen müssen:
Das Rohrstück **1** ist auch hier zylindrisch, so dass die Verlaufsrichtung dieses Rohrstückes **1** die Rohrrichtung **1'** definiert.

Die spiralig gewickelte Matrix **2** ist - bei einem runden Querschnitt - zwangsweise um eine Wickelachse **10'** gewickelt, die aufgrund des runden Querschnittes quasi zwangsweise mit der Rohrrichtung **1'** übereinstimmt.

Ein solcher spiralförmig hergestellte Wickel kann jedoch schräg zu seiner Wickelachse **10'** abgeschnitten werden, wie in Figur **1**c dargestellt, wodurch dann seine Stirnflächen **2**a, **2**b schräg zur Rohrrichtung **1'** verlaufen und damit auch die lotrecht auf den Stirnflächen stehende Tiefenrichtung **10** ebenfalls.

Mit der Tiefenrichtung **10** der Matrix **2** nicht zu verwechseln ist die Kanalrichtung **3'**:
Bei parallel zur späteren Wickelachse **10'** verlaufenden Wellen der gewellten Blechfolie verläuft die Kanalrichtung **3'** zur Wickelachse **10'** der gewickelten Matrix parallel.

Wenn jedoch wie im vorliegenden Fall die Richtung der Wellen im gewellten Blech nicht parallel zur späteren Wickelachse **10'** verlaufen, ergibt sich eine Kanalrichtung **3'**, die eben nicht mit der Wickelachse **10'** übereinstimmt.

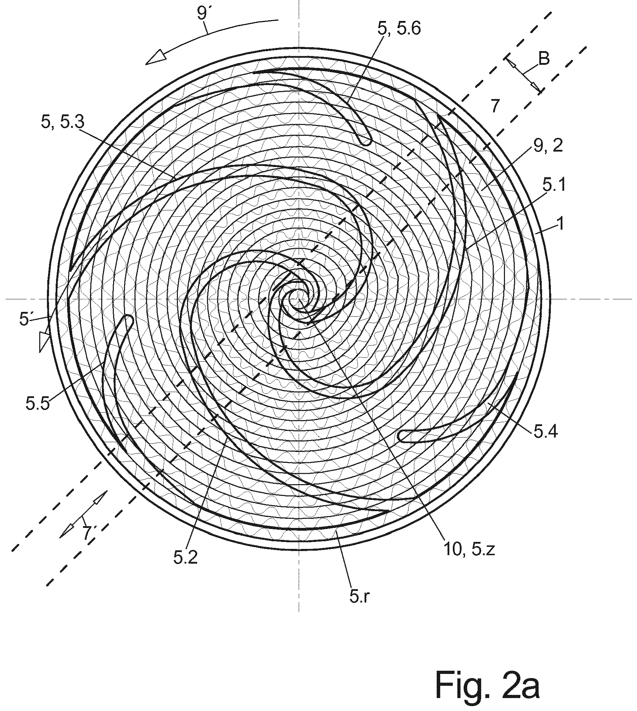

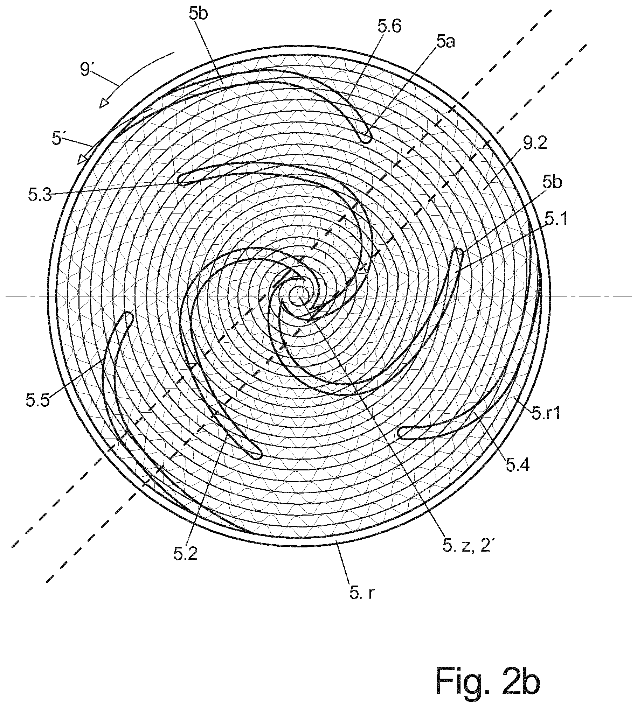

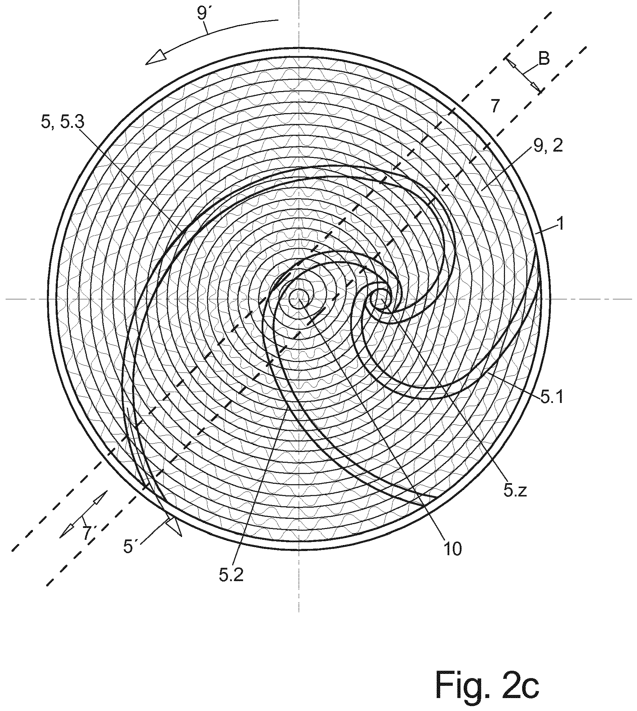

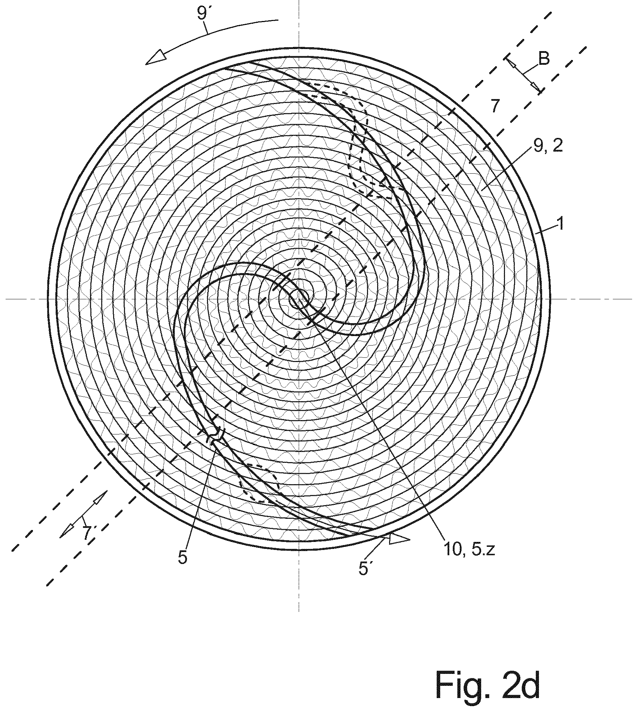

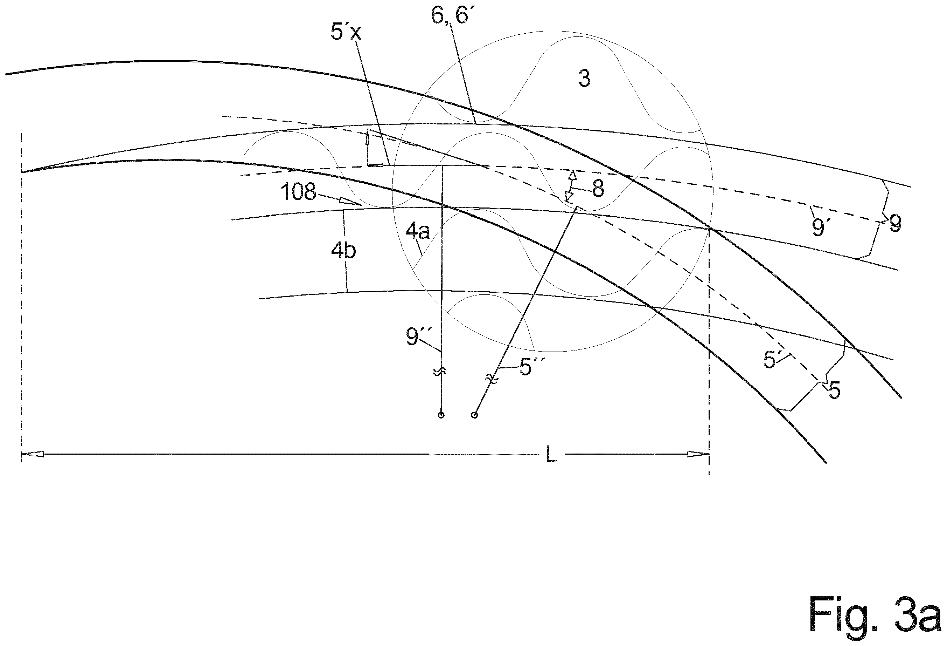

Jeder Matrix-Kanal **3** ist von seinem Querschnitt her - wie am besten in **Figur 3a** ersichtlich - begrenzt durch eine Welle der gewellten Blechfolie **4**a und an zwei ihrer benachbarten Wellenberge entlang von je einem Kontaktstreifen **6'** daran anliegenden glatten Blechlage **4**b. Die sich in Tiefenrichtung **10** erstreckenden Kontaktstreifen **6'** sind bei zweidim ensionaler Betrachtung in Tiefenrichtung **10,** wie in den Figuren **2**a bis d und **3**a bis c, geometrisch betrachtet eher punktförmige Kontaktstellen **6.**

Die so gebildete, etwa zylindrische Matrix **2** steckt - vorzugsweise mit radialem Übermaß - in einem Rohrstück **1** mit kreisringförmigem Querschnitt, welches meist in axialer Richtung **10,** der Wickelachse der Matrix **2,** etwas länger ist als die Matrix **2** und über diese in beiden Längsrichtungen etwas vorsteht.

Wie bereits bekannt, kann das zum gegeneinander Verlöten der einzelnen Blechfolien **4**a, b erforderliche Lot-Material von den offenen Enden der Matrix-Kanäle **3**, also von einer der Stirnseiten **2**a, b der Matrix **2** aus, ins Innere der Matrix **2** eingebracht werden durch Flutung der Matrix-Kanäle **3** mit einem Lot-Fluid **103.**

Zu diesem Zweck wird der Tragkörper prinzipiell mit seiner Stirnseite voraus in einen nach oben offenen Bad-Behälter **104** mit darin befindlichem Lot-Fluid **103** eingetaucht, so dass das Lot-Fluid **103** in den Matrix-Kanälen **3** von unten her aufsteigt, eben bis zur Eintauch-Höhe.

Dabei ist es ebenfalls bereits bekannt, die eintauchende Stirnfläche **2**a der Matrix **2** durch einen Abdeckstempel **100**, der an der Stirnfläche **2**a der Matrix **2** dicht anliegt, abzudecken.

Das Aufsteigen des Lot-Fluids **103** nur in ausgewählte Matrix-Kanäle **3** wird erreicht, indem in der die Stirnfläche **2**a der Matrix **2** kontaktierenden Kontaktfläche **100**a des Abdeckstempels **100** eine oder mehrere Lot-Nuten **102** vorhanden sind, die durch einen Verbindungskanal **107** durch den Abdeckstempel **100** hindurch zu dessen Rückseite **100**b mit dem Lot-Fluid **103** im Bad-Behälter **104** in Verbindung stehen. Dadurch dringt Lot-Fluid **103** nur in diejenigen Matrix-Kanäle **3** ein, die sich im Bereich der Lot-Nuten **102** befinden.

In der Aufsicht auf die Kontaktfläche **100**a auf den Abdeckstempel **100** definieren diese einen Lot-Bereich **5**, so dass ausschließlich von diesem aus Lot-Fluid **103** beim Eintauchen in die Matrix-Kanäle **3** vordringen kann, und diese Lot-Bereiche **5** sind - natürlich dann spiegelbildlich zur Form auf der Kontaktfläche **100**a des Abdeckstempels **100** - in den **Figuren 2a** **bis d** in der Aufsicht auf die Stirnfläche **2**a der Matrix **2** dargestellt.

Bei der vorliegenden Erfindung geht es primär um die Gestaltung dieser Lot-Bereiche **5** - innerhalb einer Querfläche **12**, die parallel zu einer der Stirnflächen **2**a, b verlaufen kann oder mit einer der Stirnflächen identisch ist - und zwar in ihrer Form betrachtet auf diejenige Stirnfläche **2**a oder **2**b der Matrix **2** von der aus die Matrix-Kanäle mit Lot-Fluid **103** geflutet werden, also auf die der Abdecktstempel **100** aufgesetzt wird, und nicht betrachtet in Richtung auf die Stirnfläche **100**a des Abdeckstempels **100.**

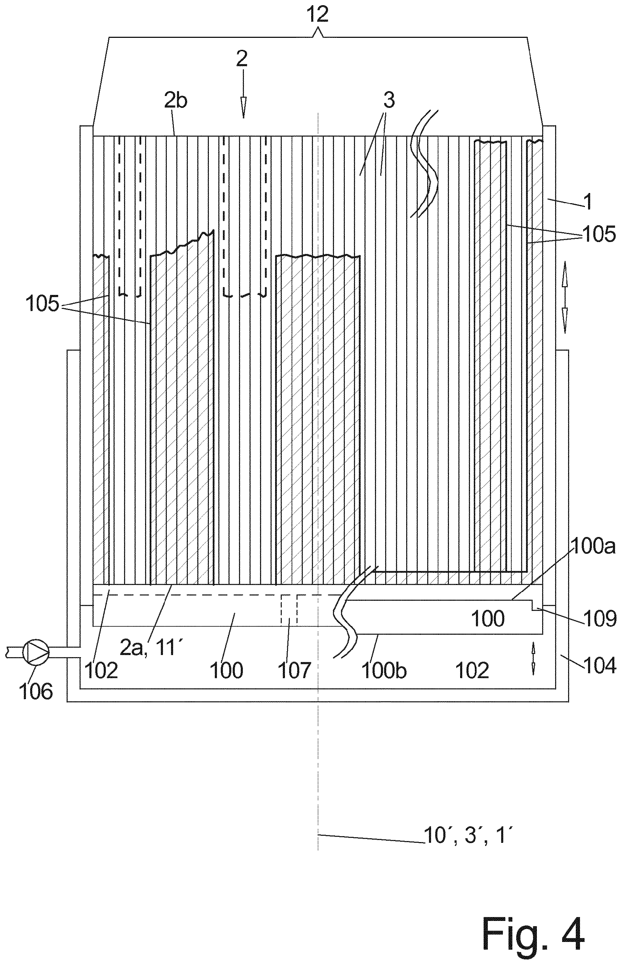

In **Fig. 4** ist ferner zu erkennen, dass der Außenumfang des Rohrstückes 1, der ja relativ zum Bad-Behälter **104** in vertikaler Richtung, der Rohrrichtung **1**' des Tragkörpers, die in diesem Fall mit der Tiefenrichtung **10** überein stimmt, für das Eintauchen beweglich sein muss, gegenüber dem Innenumfang der Seitenwände des meist napf-förmigen, Bad-Behälters **104** abgedichtet ist.

Dadurch ist es möglich, durch eine Pumpe **106**, die mit dem Inneren des Bad-Behälters **104** im Höhenbereich von dessen Lot-Fluid **103** in Verbindung steht, das Lot-Fluid **103** unter Druck zu setzen und dadurch ein höheres Aufsteigen in den Matrix-Kanälen **3** zu bewirken oder das aufsteigen zu beschleunigen, da es sich bei dem Lot-Fluid **103** oft um eine zähe Flüssigkeit oder Paste handelt.

Durch verschiedene Maßnahmen, wie etwa variieren der Breite der Löt-Nuten **102** in der Aufsicht betrachtet, oder die Positionierung des einenoder mehrerer Verbindungs-Kanäle **107** durch den Abdeckstempeln **100** hindurch kann erreicht werden, dass in den einzelnen Belotungsräumen **105** das Lot-fluid **103** unterschiedlich weit aufsteigt.

Bei dem Lot-Fluid **103** kann es sich statt einer Flüssigkeit oder Paste auch um ein fließfähiges Schüttgut aus zum Beispiel sehr kleinen Lot-Kugeln oder anders geformten Lot-Partikeln, also Feststoff-Partikeln des Lot-Materials, handelt. In letzterem Fall müssen die Innenflächen der Matrix-Kanäle **3** eine ausreichende Haftung gegenüber den darin einflutenden Lot-Partikeln aufweisen, beispielsweise indem diese Innenflächen der Matrix-Kanäle **3** zuvor in einem separaten Arbeitsgang mit einem Kleber beschichtet wurden.

In dem Abdeckstempel **100** ist in der rechten Bildhälfte ferner in der Umfangsfläche und offen zur Kontaktfläche **100**a hin, eine Ausnehmung **109** eingezeichnet, die es ermöglicht, vor dem Eintauchen in das Lot-Fluid **103** den Abdeckstempel **100** so weit von der Stirnfläche **2**a der Matrix **2** zurückzuziehen, dass eine Verbindung an der Stirnfläche des Rohrstückes **1** vorbei zwischen der Stirnfläche **2**a der Matrix **2** und dem Lot-Fluid **103** offen ist.

Die Gestaltung der Lot-Bereiche **5** betrachtet auf der Stirnfläche **2**a der Matrix **2** zeigen die **Figuren 2a** **- d** in unterschiedlichen Ausführungsformen.

Diese Lot-Bereiche **5** sollen erfindungsgemäß verschiedene Kriterien erfüllen, wobei auch unterschieden wird, in welcher radialen Zone der Querfläche **12** welche Bedingungen eingehalten werden müssen oder gelten sollen. Hier wird insbesondere unterschieden - wie in **Figur** 1b dargestellt - zwischen einer um die Symmetrieachse des Rohrstückes **1** zentrisch angeordneten, kreisförmigen Zentrumsfläche **12**a, einer diese konzentrisch umgebenden Ringfläche **12**b und eine diese wiederum konzentrisch umgebende und bis zum äußeren Rand der Matrix **2** reichende Randfläche **12**c, die in diesem Fall in Summe die Querfläche **12** bilden:
In **Fig. 2a** ist nur ein einziger Lot-Bereich **5** vorhanden, der aus einzelnen, streifenförmigen, Knick-freien, also Absatz-losen Lotbereichs-Abschnitte **5.1** bis **5.5** besteht, die einerseits über einen entlang des ringförmigen Außenumfanges der Matrix **2** umlaufenden Lotbereichs-Ring **5**.r miteinander verbunden sind.

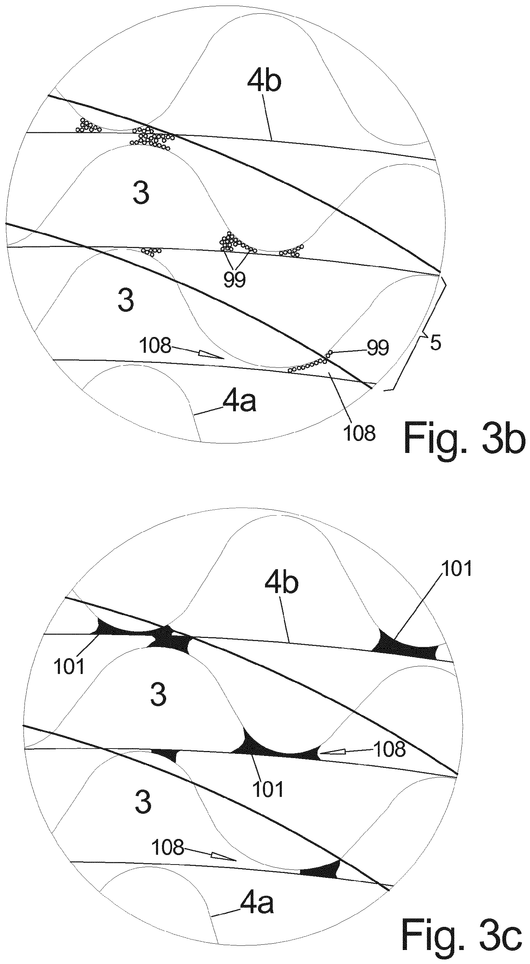

Wie weiter oben bereits dargelegt, muss dieser Lotbereichs-Ring **5**.r jedoch nicht die Bedingungen für die normalen Lot-Bereiche **5** erfüllen, wie sie insbesondere anhand der **Figuren 3a****, b** erläutert werden.

Drei identische, spiralförmige - mit vorzugsweise weniger als einem ganzen Umlauf - gestaltete streifenförmige Lotbereichs-Abschnitte **5.1** bis **5.3** treffen sich sternförmig und gleichmäßig über den Umfang verteilt im Lotbereichs-Zentrum **5**.z, welches hier auf dem Wickel-Zentrum **10** der Matrix **2** liegt.

Von dort aus erstrecken sich diese drei Lotbereichs-Abschnitte **5.1** bis **5.3** in Form von Spiralarmen - vorzugsweise mit kontinuierlich von innen nach außen zunehmendem Krümmungsradius - bis zum äußeren Rand der Matrix **2** und bis zum hier vorhandenen umlaufenden Lotbereichs-Ring **5**.r fort und stehen mit diesem in Verbindung.

Weiterhin erstrecken sich bogenförmige und ebenfalls streifenförmige Lotbereichs-Abschnitte **5.4** bis **5.6** von diesem Lotbereichs-Ring **5**.r beginnend radial nach innen bis knapp zur Hälfte des Radius der Matrix **2**, wobei sich ein solcher Lotbereichs-Abschnitt **5.4** bis **5.6.** jeweils zwischen zwei der spiralförmigen Lotbereichs-Abschnitte **5.1** bis **5.3** befindet.

Alle diese streifenförmigen Lotbereichs-Abschnitte **5.1** bis **5.6** sind gekrümmt und wechseln ihre Krümmungsrichtung nicht, und ihre Krümmungsrichtung ist die gleiche, und stimmt auch überein mit der Krümmungsrichtung der spiralig gewickelten Lagen **9** der Matrix **2**, jedoch unterscheiden sie sich in der Stärke ihrer jeweiligen Krümmung, also den Krümmungsradien:
Der Krümmungsradius der Lotbereichs-Abschnitte **5.1** bis **5.6** ist jeweils geringer als der Krümmungsradius der Lage **9** in dem Bereich, in dem sich diese Lage **9** mit dem jeweiligen streifenförmigen Lot-Bereich 5.1 bis 5.6 schneidet, wie am besten anhand der vergrößerten Darstellung der **Fig.** 3a ersichtlich.

Dort ist zum Einen der kleinere der immer zwei vorhandenen Zwischenwinkel **8** zwischen der Verlaufsrichtung **5'** des Lot-Bereiches **5** und der Verlaufsrichtung **9**' der Lage **9** am Kreuzungspunkt zwischen beiden eingezeichnet, sowie der jeweilige Krümmungsradius **5**" bzw. **9**" angedeutet, dessen Größe sich aus der unterschiedlichen Krümmung von Lot-Bereich **5** und Lage **9** abschätzen lässt.

Aus dieser Figur ist auch ersichtlich, dass am Kreuzungspunkt der Verlaufsrichtung **5**' des Lot-Bereiches **5** mit der Verlaufsrichtung **9**' der Lage **9** die Verlaufsrichtung **5**' eine Komponente **5**'x aufweist, die in Richtung der Verlaufsrichtung **9**' der Lage **9** liegt. Aus der Überlagerung des Lotbereiches **5** mit der Lage **9** ergibt sich auch die Länge L des Lagen-Abschnittes, vom Eintritt bis zum Austritt dieser Lage **9** aus dem Lotbereich **5**, also diejenige Länge L, in der bei dieser Lage **9** durch Überlagerung mit diesem Lotbereich **5** eine Belotung in der Lage **9** stattfinden kann.

Während **Fig. 3a** den Zustand vor dem Beloten, also bei bereits fertig hergestellter und insbesondere in das Rohrstück **1** eingeschobener Matrix **2**, darstellt, zeigt **Fig. 3b** den Zustand nach dem Beloten, wie es anhand der Fig. **4** erläutert wurde:
Dann haben sich die Lot-Kugeln **99** - die wie ersichtlich einen mindestens um den Faktor **10** kleineren Durchmesser besitzen als der Querschnitt eines Matrix-Kanales **3** - primär in den Zwickeln **108** zwischen den Blechfolien, in diesem Fall der gewellten Blechfolie **4**a und der glatten Blechfolie **4**b - angelagert..

Dabei ist anhand der rechten unteren Ansammlung von Lotkugeln **99** ersichtlich, dass trotz des Eindringens von Lotkugeln **99** in die Matrixkanäle **3** nur von dem Lotbereich0 **5** aus, in der Tiefenrichtung, der Blickrichtung der Figur **3**b, diese Lotkugeln **99** innerhalb eines Matrix-Kanals **3**, in dem sie sich befinden, auch zum Rand, beispielsweise in den Zwickel **108** hinein, eines solchen Matrix-Kanals **3** und damit aus dem Lotbereich **5** begrenzt heraus wandern und sich in einem Zwickel **108** anlagern können, der außerhalb des Lotbereiches **5** liegt.

Beim anschließenden Verlöten schmelzen die Lot-Kugeln **99** und verlaufen ineinander und das aufgeschmolzene und später erstarrte Lot-Material haftet an den Blechfolien **4**a, b vor allem im Bereich der Zwickel **108** dazwischen an, so dass sich nach dem Erstarren die in **Fig. 3c** ersichtlichen Belotungszonen **101** in den Zwickeln **108** ergeben.

Daraus ist ersichtlich, dass jeder der im Querschnitt etwa hutförmigen Matrix-Kanäle **3** zwei solcher Zwickel **108** aufweist und dementsprechend meist zwei solcher - bei dreidimensionaler Betrachtung stabförmiger - Belotungszonen 101, deren nicht ganz identischen Querschnitte in **Fig. 3c** sichtbar sind.

Dabei wird ferner ersichtlich, dass für den Fall, dass sich der Rand des Belotungsbereiches **5** durch einen solchen Matrix-Kanal **3** hindurch erstreckt, auch nur einer der beiden Zwickel **108** eines solchen Matrix-Kanals **3** beim Beloten belotet werden kann und beim Verlöten verlötet wird.

Da jedoch auch die einseitige Verlötung einer solchen streifenförmigen Kontaktstelle **6**, also eines Kontaktstreifens **6**', zwischen gewellter Blechfolie und glatter Blechfolie eine ausreichende Steifigkeit ergibt, aber mit geringerem Materialverbrauch an Lot und damit geringerem Gewicht der verlöteten Matrix **2**, besteht ein - sekundäres - Ziel der Erfindung auch darin, möglichst viele nur einseitig verlötete Matrix-Kanäle **3** durch entsprechende Position und Form des wenigstens einen Belotungsbereiches **5** zu erzielen.

Zurück zu **Fig. 2a** ist dort ferner quer über die Querebene elf, insbesondere die Stirn Fläche **2**a der Matrix **2** hinweg - hier auch über das Wickel-Zentrum **10** und/oder das Lotbereichs-Zentrum **5**.z hinweg, was jedoch nicht zwingend erforderlich ist - ein in dieser Ansicht über die gesamte Länge gleich breiter Korridor **7** gelegt mit einer Breite B, welche dem vierfachen der Dicke D einer Lage **9** der Wicklung entspricht, wie sie in **Fig. 3a** eingezeichnet ist.

Daraus ist ersichtlich, dass in Verlaufsrichtung **7**' des Korridors **7** aufeinanderfolgend nicht mehr als sieben, insbesondere nicht mehr als fünf, Lagen **9** vorhanden sind, die im Breiten-Bereich des Korridors und gleichzeitig in dem gleichen Lotbereich oder Lotbereichs-Abschnitt liegen.

Dadurch ergibt sich eine Verteilung und Relation der späteren verlöteten zu den nicht verlöteten Kontaktstellen in einer Radialebene der Matrix, die eine ausreichend stabile, aber sehr elastische Matrix **2** ergibt.

Die Gestaltung des Lot-Bereichs **5** in **Fig. 2b** unterscheidet sich von derjenigen der Fig. 2a in mehreren Punkten:
Zum Einen erreichen die - sich ebenfalls im Lot-Zentrum **5**.z, welches hier mit dem Wickel-Zentrum **10** übereinstimmt, treffenden - sternförmig und jeweils spiralförmig verlaufenden knickfreien Lotbereichs-Abschnitte **5.1** bis **5.3** nicht den äußeren Rand der Matrix **2**, sondern enden etwa **1/3** des Radius vor dem äußeren Rand, erfüllen aber insbesondere ansonsten die gleichen Bedingungen wie anhand der Fig. **2**a beschrieben.

Auch die anhand der Fig. **2**a beschriebenen weiteren knickfreien Lotbereichs-Abschnitte **5.4** bis **5.6** sind vorhanden. Jedoch ist von dem in Fig. **2**a über den gesamten Außenumfang umlaufenden Lotbereichs-Ring **5**.r nur ein Lotbereich-Ring-Segment **5**.r**1** vorhanden, und dieses überdeckt in Umfangsrichtung das äußere Ende **9**b der spiraligen Wicklung der Lage **9** der Matrix **2.**

In diesem Fall mündet in diesem Lotbereich-Ring-Segment 5.r1 einer der Lotbereichs-Abschnitte **5.5**, was jedoch nicht zwingend ist.

Die Gestaltung der Lot-Bereiche in **Fig. 2c** ähnelt der der Fig. **2**a, bis auf zwei Unterschiede:
Das Lotbereichs-Zentrum **5**.z liegt abseits des Wickel-Zentrums **10**, aber noch innerhalb der Querschnittsfläche der Matrix **2**, und/oder es sind nur Lotbereich-Abschnitte **5.1** bis **5.3** vorhanden, die sich in dem Lotbereichs-Zentrum **5**.z treffen und ansonsten wiederum die anhand der Fig. **2**a beschriebenen Bedingungen für die Lotbereichs-Abschnitte **5.1** bis **5.3** erfüllen.

**Fig. 2d** zeigt einen Lot-Bereich **5** mit nur einem einzigen Lotbereichs-Abschnitt in Form eines aus zwei Spiralarmen zusammengesetzten, knickfreien streifenförmigen Lot-Bereich **5**, der über das Lotbereichs-Zentrum **5**.z hinweg verläuft, und dort jedoch seine Krümmungsrichtung ändert, und dessen eines Ende im Bereich des äußeren Wicklungsendes **9**b der Matrix **2** endet und dieses Wicklungsende **9**b überdeckt.

In diesem Zustand des Abdeckstempels zum Tragkörper kann der Tragkörper zunächst mit einem nur geringen axialen Längenabschnitt seiner Matrix **2** in das Lot-Fluid **103** eingetaucht werden, wenn eine vollflächige Belotung einer kurzen axialen Anfangsstrecke der Matrix **2** gewünscht wird.

Anschließend kann der Tragkörper wieder aus dem Lot-Fluid **103** herausgehoben, der Abdeckstempel **100** bis zur dichten Kontaktierung an die Stirnfläche **2**a der Matrix **2** heranbewegt werden und danach der Tragkörper **1** wesentlich tiefer in das Lot-Fluid **103** abgesenkt werden, um eine Belotung entsprechend der ausgewählten Lot-Bereiche **5** tief ins Innere der Matrix **2** hinein in die sich axial von den Lotbereichen **5** aus erstreckenden Belotung-Räume **105** hinein zu bewirken.

Diesbezüglich ist In der rechten Bildhälfte der **Figur 4** auch dargestellt, dass dies bis zur oben liegenden, gegenüberliegenden Stirnfläche **2**b hin erfolgen kann.

Alternativ erfolgt gemäß der linken Bildhälfte in **Figur 4** die Belotung, also beispielsweise das Eintauchen, nur bis gut zur Mitte der axialen Erstreckung der Matrix **2**, was dann in aller Regel eine anschließende Belotung von der anderen Stirnfläche **2**b her erfordert, mit sich von den beiden Stirnseiten **2** a, b her erstreckenden, in Rohrrichtung **1**', aber nicht in Querrichtung **11** überlappenden, Belotungs-Räumen **105.**

### BEZUGSZEICHENLISTE

- **1**: Rohrstück
- **1'**: Rohrrichtung
- **2**: Matrix
- **2'**: Verlaufsrichtung, Spiralrichtung
- **2**a, b: Stirnfläche
- **3**: Matrix-Kanal
- **3**': Kanalrichtung
- **4** a, b: Blechfolie
- **5**: Lotbereich
- **5**.r: Lotbereich-Ring
- **5**.r**1**: Lotbereich-Ring-Segment
- **5**.z: Lotbereich-Zentrum
- **5'**: Verlaufsrichtung, Spiralrichtung
- **5**'x: Richtungs-Komponente
- **5"**: Krümmungs-Radius
- **5.1, 5.2**: Lotbereich-Abschnitt
- **5** a: Anfangspunkt
- **5** b: Endpunkt
- **6**: Kontaktstelle
- **6'**: Kontaktstreifen
- **7**: Korridor
- **8**: Zwischenwinkel
- **9**: Lage
- **9**a: Lagen-Abschnitt
- **9**b: äußeres Wicklungs-Ende
- **9'**: Verlaufsrichtung, Spiral-Richtung
- **9"**: Krümmungs-Radius
- **10**: Tiefenrichtung, Wickel-Zentrum,
- **10'**: Wickelachse
- **11**: Querrichtung
- **11'**: Radialebene, Querebene
- **12**: Querfläche
- **12**a: Zentrumsfläche
- **12**b: Ringfläche
- **12**c: Randfläche
- **13**: Durchmesser

- **99**: Lotkugel
- **100**: Abdeckstempel
- **100** a: Kontaktfläche
- **100** b: Rückseite
- **101**: Belotungs-Zone
- **102**: Lot-Nut
- **103**: Lot-Fluid
- **104**: Bad-Behälter
- **105**: Belotungs-Raum
- **106**: Pumpe
- **107**: Verbindungs-Kanal
- **108**: Zwickel
- **109**: Ausnehmung

- b: Breite
- B: Breite
- D: Dicke einer Lage
- L: Länge

## Patentansprüche

1. Tragkörper für Katalysatoren oder Partikelabscheider mit
- einem umgebenden Rohrstück (**1**), welches in einer Rohrrichtung (**1**') verläuft,
- einer das Rohrstück (**1**) zwischen dessen Wänden ausfüllenden Matrix (**2**) aus aneinander anliegenden, meist einander kontaktierenden, Lagen (**9**) der wenigstens einen dünnen, zum Teil strukturierten, Blechfolie (**4**a), durch die in die Tiefe der Matrix (**2**) hinein verlaufende, durchgängige, in den Stirnflächen (**2**a, b) der Matrix (**2**) endende, Matrix-Kanäle (**3**) gebildet werden,
- wobei die Lagen (**9**) der wenigstens einen Blechfolie (**4**a) an ihren gegenseitigen Kontaktstellen (**6**) teilweise gegeneinander verlötet sind und
- betrachtet in Tiefenrichtung (**10**), der Lotrechten auf die Stirnfläche (**2**a) der Matrix (**2**), in wenigstens einer parallel zur Stirnfläche (**2**a) liegenden Querfläche (**12**) nur ein oder mehrere definierte Lotbereiche (5), deren Flächen in der Summe kleiner sind als die Querfläche (**12**) der Matrix (**2**), in dieser Querfläche (**12**) belotet sind, wobei
- in dem Lotbereich alle darin liegenden Kontaktstellen zwischen den Blechfolien belotet sind,
- der wenigstens eine Lotbereich (**5**) streifenförmig ausgebildet ist,
- zumindest in einer Ringfläche (**12**b) der Querfläche (**12**), die zwischen deren Zentrumsfläche (**12**a) und deren außen umlaufender Randfläche (**12**c) liegt, der wenigstens eine streifenförmige Lotbereich (**5**) gekrümmt ist,
**dadurch gekennzeichnet, dass**
- die für die Querfläche (**12**) festgelegten Bedingungen über mindestens 50 %, der in Rohrrichtung (**1**') gemessenen axialen Länge der Matrix (**2**) vorliegen.

2. Tragkörper nach Anspruch **1**,
**dadurch gekennzeichnet, dass**
der streifenförmige Lotbereich (**5**) aus mehreren Lotbereichs-Abschnitten (**5.1, 5.2**) besteht, und die einzelnen Lotbereichs-Abschnitte (**5.1, 5.2**) einen knickfreien Verlauf aufweisen.

3. Tragkörper nach einem der Ansprüche **1** oder **2**,
**dadurch gekennzeichnet, dass**
die für die Querfläche (**12**) festgelegten Bedingungen über mindestens **75** %, besser mindestens **90** % der in Rohrrichtung (**1**') gemessenen axialen Länge der Matrix (**2**) vorliegen.

4. Tragkörper nach einem der vorhergehenden Ansprüche,
**dadurch gekennzeichnet, dass**
der streifenförmige Lotbereich (**5**) oder Lotbereichs-Abschnitte (**5.1, 5.2**) lotrecht zu seiner Verlaufsrichtung (**5**') gemessen eine Breite (b) aufweist, die
- maximal dem Zehnfachen, besser maximal dem Siebenfachen, besser maximal dem Fünffachen, besser maximal dem Dreifachen, der Dicke (D) einer Lage (**9**) entspricht,
oder
- die mindestens einfach, besser mindestens zweifach, besser mindestens dreifach, bester mindestens vierfach so groß ist wie die Dicke (D) einer Lage (**9**).

5. Tragkörper nach einem der vorhergehenden Ansprüche,
**dadurch gekennzeichnet, dass**
die größte Erstreckung der Zentrumsfläche (**12**a) maximal
- dem Achtfachen, besser dem Fünffachen, der Dicke (D) einer Lage (**9**) beträgt.

6. Tragkörper nach einem der vorhergehenden Ansprüche,
**dadurch gekennzeichnet, dass**
der außen umlaufende Randfläche (**12**c) eine Randbreite (Rb) quer zu seiner Verlaufsrichtung aufweist, die maximal
- dem Achtfachen, besser dem Fünffachen, besser dem Dreifachen, der Dicke (D) einer Lage (**9**) entspricht.

7. Tragkörper nach einem der vorhergehenden Ansprüche,
**dadurch gekennzeichnet, dass**
- sich mehrere Lotbereichs-Abschnitte (**5.1, 5.2, 5.3**) des Lotbereiches (**5**) in insbesondere einem gemeinsamen Lotbereichs-Zentrum (**5**.z) treffen.

8. Tragkörper nach Anspruch **7**,
**dadurch gekennzeichnet, dass**
das Lotbereich-Zentrum (**5**.z)
- im geometrischen Zentrum (**10**)
- oder im Schwerpunkt der Querfläche (**12**) liegt,
- oder bei einer aus spiralförmig gewickelten Blechfolien (**4**a, b) gebildeten zylindrischen Matrix (**2**) bei Betrachtung in Tiefenrichtung (**10**) im Wickel-Zentrum (**10**') der Matrix (**2**) liegt.

9. Tragkörper nach einem der vorhergehenden Ansprüche,
**dadurch gekennzeichnet, dass**
- der streifenförmige Lotbereich (**5**) oder knickfreie Lotbereichs-Abschnitt (**5.1**) des streifenförmigen Lotbereichs (**5**) über den gesamten Verlauf die gleiche Krümmungsrichtung aufweist und
- insbesondere die Krümmungsrichtung bei einer spiralförmig gewickeltem Matrix (**2**) mit der Krümmungsrichtung der Lagen (**9**) der Matrix (**2**) übereinstimmt, und
- sich insbesondere der Zwischenwinkel (**8**) vom inneren Ende (**5**a) des streifenförmigen Lotbereiches (**5**) oder Lotbereich-Abschnittes (**5.1**) zu seinem äußeren Ende (**5**b) hin abnimmt, insbesondere fortlaufend abnimmt und insbesondere am äußeren Rand der Matrix (**2**) Null beträgt oder sich asymptomatisch an den äußeren Rand der Matrix (**2**) annähert.

10. Tragkörper nach einem der vorhergehenden Ansprüche,
**dadurch gekennzeichnet, dass**
die Verlaufsrichtung (**5'**) des streifenförmigen Lotbereiches (**5**) oder Lotbereichs-Abschnitte (**5.1, 5.2**) über mindestens **50** %, besser mindestens **70** %, besser mindestens **80** %, besser mindestens **90** %, ihrer Länge eine Richtungskomponente (**5'**x) enthält, die nicht parallel zur Verlaufsrichtung (**9'**) der den Lotbereich (**5**) an dieser Stelle kreuzenden Lage (**9**) von Blechfolien (**4** a, b) verläuft.

11. Tragkörper nach einem der vorhergehenden Ansprüche,
**dadurch gekennzeichnet, dass**
die Verlaufsrichtung (**5'**) des streifenförmigen Lotbereiches (**5**) zu der Verlaufsrichtung (**9'**) der an dieser Stelle den Lotbereich (5) kreuzenden Lage (**9**) zumindest in der Ringfläche (**12**b) an mindestens einer Stelle des Verlaufs des Lotbereiches (**5**) einen kleineren von den beiden Zwischenwinkel (**8**) von
- mindestens **10**°, besser mindestens **15**°, besser mindestens **20** °
oder
- höchstens **40**°, besser höchstens **35**°Grad
aufweist.

12. Tragkörper nach einem der vorhergehenden Ansprüche,
**dadurch gekennzeichnet, dass**
- ein entlang des in Tiefenrichtung (**10**) betrachteten Umfangs der Matrix (**2**) herum umlaufender Lotbereichs-Ring (**5**.r) vorhanden ist und
- insbesondere der Lotbereichs-Ring (**5**.r) mit allen Lotbereichen (**5**) und insbesondere allen Lotbereichs-Abschnitten (**5.1 - 5.6**) in Verbindung steht.

13. Tragkörper nach einem der vorhergehenden Ansprüche 1 - 12,
**dadurch gekennzeichnet, dass**
im außen umlaufenden Randbereich der Radialebene (**11'**) der Matrix (**2**), insbesondere der Ringfläche (**12**b), nur ein Lotbereich-Ring-Segment (**5**.r**1**) vorhanden ist, welches bei einer spiralförmig gewickelten Matrix (**2**) die außenseitigen freien Enden der wenigstens einen Lage (**9**) der Matrix (**2**) in Umfangsrichtung übergreift.

14. Tragkörper nach einem der vorhergehenden Ansprüche, der eine kreisrunde Stirnfläche (**2**a) aufweist,
**dadurch gekennzeichnet, dass**
- die Matrix (**2**) entweder die Form eines Zylinders besitzt sowie kreisrunde, insbesondere lotrecht zur Rohrrichtung (**1**') liegende, Stirnflächen (**2**a, b) aufweist oder eine elliptische Stirnfläche (**2**a, b) besitzt und aus wenigstens einer, vorzugsweise zwei aneinander liegenden, spiralförmig um eine Wickel-Achse (**10**) gewickelten Blechfolien (**4**a, b) besteht und die Querebene (**11**') lotrecht zur Wickel-Achse (**10**) liegt und
- insbesondere innerhalb eines in der Querfläche (**12**) durch deren geometrischen Mittelpunkt (**10**), verlaufenden, ansonsten willkürlich positionierten, Korridors (**7**), der eine Breite (B) von dem vierfachen der Dicke (D) einer Lage (**9**) besitzt, in höchstens **10**, besser höchstens nur sieben, besser höchstens nur fünf, jeweils aufeinanderfolgenden Lagen (**9**) eine belotete Kontaktstelle (**6**) in diesem Korridor (**7**) vorhanden ist.

15. Tragkörper nach einem der vorhergehenden Ansprüche, wobei der in einer Querfläche (**12**) vorliegende streifenförmige Lotbereich (**5**) sich in Kanalrichtung (**3**') dreidimensional als wenigstens ein Belotungsraum (**105**) mit einem Querschnitt in Form des wenigstens einen Lotbereiches (**5**) fortsetzt. **dadurch gekennzeichnet, dass**
bei einer aus gewellter Blechfolie (**2**a) und glatter Blechfolie (**2**b) gemeinsam, insbesondere spiralförmig um eine Wickelachse (**10**) gewickelter Matrix (**2**) der, insbesondere jeder, Belotungsraum (**105**)
- wenigstens eine sich in Kanalrichtung (**3**') erstreckende, stabförmige Belotungszone (**101**) enthält,
- die sich jeweils auf mindestens einer Seite des in Kanalrichtung (**3**') verlaufenden Kontaktstreifens (**6**') zwischen gewellter (**2**a) und glatter (**2**b) Blechfolie im Zwickel (**108**) zwischen diesen beiden Blechfolien (**4**a, b) befinden,
- in jeder Belotungszone (**101**) aneinander und/oder an den Blechfolien (**4**a, b) anhaftende Lotpartikel, insbesondere Lotkugeln (**99**), vorhanden sind und
- insbesondere in einer Belotungszone (**101**) die Lotpartikel, insbesondere Lotkugeln (**99**), zueinander in Kanalrichtung (**3**') beabstandet sein können.

16. Tragkörper nach einem der vorhergehenden Ansprüche,
**dadurch gekennzeichnet, dass**
- die Belotungszonen (**101**) innerhalb eines Belotungsraumes (**105**) unterschiedliche Längen in Kanalrichtung (**3**') besitzen.

17. Tragkörper nach einem der vorhergehenden Ansprüche,
**dadurch gekennzeichnet, dass**
die Matrix (**2**) von beiden Stirnseiten (**2**a, b) und dortigen streifenförmigen Lotbereichen (**5**) aus sich in Kanalrichtung (**3**') erstreckende Belotungsräume (**105**) aufweist und
- entweder die an den beiden Stirnflächen (**2**a, b) vorhandenen Lotbereiche (**5**) betrachtet in Tiefenrichtung (**10**) deckungsgleich zueinander angeordnet sind und sich die davon ausgehenden Belotungsräume (**105**) in Tiefenrichtung (**10**) nicht bis zur Mitte der Tiefe der Matrix (**2**) erstrecken
- oder die an den beiden Stirnseiten (**2**a, b) angeordneten streifenförmigen Lotbereiche (**5**) sich betrachtet in Tiefenrichtung (**10**) nicht überschneiden und die von den beiderseitigen Lotbereichen (**5**) sich in Tiefenrichtung (**10**) ins Innere der Matrix (**2**) erstreckenden Belotungsräume (105) in Tiefenrichtung (**10**) überlappen.

18. **Verfahren** zum bereichsweisen Beloten eines Tragkörpers nach einem der vorhergehenden Ansprüche für Katalysatoren oder Partikelabscheider mit
- einem umgebenden Rohrstück (**1**),
- einer das Rohrstück (**1**) zwischen dessen Wänden ausfüllenden Matrix (**2**) aus aneinander anliegenden, meist einander kontaktierenden, Lagen (**9**) von wenigstens einer dünnen, zum Teil strukturierten, Blechfolie (**4**a), durch die in die Tiefe der Matrix (**2**) hinein verlaufende, durchgängige, in den Stirnflächen (**2**a, b) der Matrix (**2**) endende, Matrix-Kanäle (**3**) gebildet werden,
wobei von zumindest einer der Stirnflächen (**2** a, b) aus nur in sich in die Kanalrichtung (**3**') hinein erstreckenden Belotungszonen (**105**), die in streifenförmigen Lotbereichen (**5**) auf der wenigstens einen Stirnfläche (**2**a) enden, belotet wird, indem
- auf die Stirnfläche (**2**a) der Matrix (**2**) ein Abdeck-Stempel (**100**) dicht aufgesetzt wird,
- in dessen zu der Stirnfläche (**2**a) hin gerichteten Kontakt-Fläche (**100**a) wenigstens eine Lot-Nut (**102**) vorhanden ist, die mit der Rückseite (**100**b) des Abdeck-Stempels (**100**) über einen Verbindungskanal (**107**) in Verbindung steht,
- wobei die Querschnittskontur der Lot-Nut (**102**) in ihrer Verlaufsrichtung von der Mündung des Verbindungskanals (**107**) in der Lot-Nut (**102**) aus abnehmend gestaltet ist und
- der Tragkörper mit auf der Stirnfläche (**2**a) aufgesetztem Abdeck-Stempel (**100**) voran in ein Bad mit Lot-Fluid (**103**) oder Haft-Fluid eingetaucht wird.

19. Verfahren nach Anspruch **18,**
**dadurch gekennzeichnet, dass**
während des Eintauchens der Außen-Umfang des Rohrstückes (**1**) gegenüber dem Innen-Umfang des Bad-Behälters (**104**) abgedichtet gehalten wird.

## Claims

1. A carrier for catalytic converters or particle precipitators, the carrier comprising:
- a surrounding tube element (1) which extends in a tube orientation (1')
- a matrix (2) filling the tube element (1) between walls of the tube element, the matrix including adjoining, typically contacting layers (9) of at least one thin, partially structured sheet metal foil (4a) which forms the matrix channels (3) that extend into a depth of the matrix (2) continuously and terminate in faces (2a, b) of the matrix (2),
- wherein the layers (9) of the at least one sheet metal foil (4a) are partially soldered together at mutual contact locations (6), and
- wherein viewed in a depth direction (10), a perpendicular on the face (2a) of the matrix (2), in at least one transversal surface (12) that is parallel to the face (2a) only one or plural defined solder portions (5), whose surfaces are in total smaller than the transversal surface (12) of the matrix (2) are solder coated in this transversal surface (12),
- wherein all contact locations between the sheet metal foils are solder coated in the solder portion,
- wherein the at least one solder portion (5) is provided strip-shaped,
- wherein the at least one strip-shaped solder portion (5) is cambered in at least one anular surface (12b) of the transversal surface (12) which is arranged between its center surface (12a) and its outer circumferential edge surface (12c),
**characterized in that**
- conditions defined for the transversal surface (12) are provided over at least 50% of an axial length of the matrix (2) measured in the tube direction (1').

2. The carrier according to claim 1
**characterized in that**,
the strip-shaped soldering portion (5) is made from plural soldering portion sections (5.1, 5.2) and the individual soldering portion sections (5.1, 5,2) extend without kinks.

3. The carrier according to one of the claims 1 or 2,
**characterized in that**,
conditions that are predetermined for the transversal surface (12) are provided over at least 75 %, better at least 90% of an axial length of the matrix (2) that is measured in the tube direction (1').

4. The carrier according to one of the preceding claims,
**characterized in that**
the strip-shaped solder portion (5) or solder portion sections (5.1, 5.2) have a width (b) perpendicular to their orientation (5')
- which corresponds to ten times at the most, better seven times at the most, better five times at the most, better three times at the most of a thickness (D) of a layer (9),
or
- which is at least the size of the thickness (D) of a layer (9), better at least twice the size, better at least three times the size, better at least four times the size.

5. The carrier according to one of the preceding claims,
**characterized in that**
a largest dimension of the center surface (12a) is at the most eight times, better at the most five times the thickness (D) of a layer (9).

6. The carrier according to one of the preceding claims,
**characterized in that**,
the outer circumferential edge surface (12c) has an edge width (Rb) transversal to its orientation which corresponds to at the most eight times, better five times, better three times the thickness (D) of a layer (9).

7. The carrier according to one of the preceding claims,
**characterized in that**,
- several solder portion sections (5.1, 5.2, 5.3) of the solder portion (5) join in particular in a common solder portion center (5.z).

8. The carrier according to claim 7,
**characterized in that**,
the solder portion center (5.z) is arranged
- in a geometric center (10), or
- in a cross section of the transversal surface (12), or
- in case of a cylindrical matrix (2) formed from spiral wound sheet metal foils (4a, b) for a view in the depth direction (10), the solder portion center is arranged in a winding center (10') of the matrix (2).

9. The carrier according to one of the preceding claims,
**characterized in that**,
- the strip shaped solder portion (5) or the kink free solder portion section (5.1) of the strip shaped solder portion (5) has an identical curvature orientation over its entire length, and
- in particular the curvature orientation of a spiral wound matrix (2) coincides with the curvature orientation of the layers (9) of the matrix (2), and
- in particular an intermediary angle (8) decreases in particular decreases continuously from an inner end (5a) of the strip shaped solder portion (5) or of the solder portion (5.1) to its outer end (5b) and in particular the intermediary angle is zero at an outer edge of the matrix (2) or asymptomatically approaches the outer edge of the matrix (2).

10. The carrier according to one of the preceding claims,
**characterized in that**,
the orientation (5') of the strip shaped solder portion (5) or solder portion sections (5.1, 5.2) includes a dimensional component (5'x) over at least 50%, better at least 70%, better at least 80%, better at least 90% of its length, wherein the directional component (5'x) is not parallel to the orientation (9') of the layer (9) of sheet metal foils (4a, b) that intersect the solder portion (5) at this location.

11. The carrier according to one of the preceding claims,
**characterized in that**,
the orientation (5') of the strip shaped solder portion (5) is oriented at a smaller of two intermediary angles (8) relative to an orientation (9') of a layer (9) intersecting the solder portion (5) at this location at least in the annular surface (12b) at least one location of the solder portion (5), wherein the smaller of the two intermediary angles has a size of
- at least 10 degrees, better at least 15 degrees, better at least 20 degrees, or
- at the least 40 degrees, at the least 35 degrees.

12. The carrier according to one of the preceding claims,
**characterized in that**,
- a circumferential solder portion ring (5.r) is provided along a circumference of the matrix (2) viewed in the depth direction (10), and
- in particular the solder portion ring (5.r) is connected with all solder portions (5) and in particular all solder portion sections (5.1 through 5.6).

13. The carrier according to one of the claims 1-12,
**characterized in that**,
only one solder portion ring segment (5.r1) is provided in the circumferential edge portion of the radial plane (11') of the matrix (2), in particular of the anular surface (12b), wherein the solder portion ring segment reaches beyond free ends of the at least one layer (9) of the matrix (2) in the circumferential direction for a spiral wound matrix (2).

14. The carrier according to one of the preceding claims, which carrier has a circular face (2a),
**characterized in that**
- the matrix (2) is either shaped cylindrical with faces (2a, b) that are circular and in particular oriented orthogonal to the tube orientation (1') or the matrix has an elliptical face (2a, b) and is made from at least one, advantageously two sheet metal foils (4a, b) contacting each other that are spiral wound about a winding axis (10) and the transversal plane (11') is orthogonal to the winding axis (10), and
- a soldered contact location (6) is provided in a corridor (7), in particular within the corridor (7) that extends in the transversal surface (12) through its geometric center (10) but which is otherwise random positioned and has a width (B) of four times a thickness (D) a layer (9), in at most 10, better at the most only 7, better at the most only 5, respectively sequential layers (9).

15. The carrier according to one of the preceding claims, wherein the strip shaped solder portion (5) that is provided in a transversal surface (12) extends in the channel orientation (3') in three dimensions as at least one soldering space (105) with a cross section in a shape of the at least one solder portion (5),
**characterized in that**,
the soldering space (105), in particular each soldering space (105) for a matrix (2) that is jointly wound from a corrugated sheet metal foil (2a) and a smooth sheet metal foil (2b), in particular spiral wound about a winding axis (10)
- includes at least one rod-shaped soldering zone (101) that extends in the channel orientation (3'),
- is arranged respectively on at least one side of the contact strip (6') that extends in the channel orientation (3') between the corrugated sheet metal foil (2a) and the smooth sheet metal foil (2b) in a knuckle (108) between the two sheet metal foils (4a, b),
- each soldering zone (101) includes solder particles that adhere to one another and/or to the sheet metal foils (4a, b), in particular solder balls (99), and
- in particular in a soldering zone (101) the solder particles, in particular the solder balls (99), can be offset from each other in the channel direction (3').

16. The carrier according to one of the preceding claims,
**characterized in that**,
- the solder zones (101) have different lengths in the channel direction (3') within a soldering space (105).

17. The carrier according to one of the preceding claims,
**characterized in that**,
the matrix (2) has soldering spaces (105) that extend from both faces (2a, b) and from strip-shaped solder portions (5) in a channel orientation (3') and,
- either the solder portions (5) provided at both faces (2a, b) coincide with each other in the depth direction (10) and soldering spaces (105) extending therefrom do not extend in the depth direction (10) to a center of a depth of the matrix (2),
- or the strip-shaped solder portions (5) arranged at the two faces (2a, b) do not overlap in the depth direction (10) and the solder portions (105) that extend from the solder portions (5) on both sides into the depth direction (10) into an interior of the matrix (2) overlap in the depth direction (10).

18. A method for depositing solder on portions of a carrier element according to one of the preceding claims for catalytic converters or particle precipitators including
- an enveloping tube element (1),
- a matrix (2) that fills the tube element (1) between its walls, the matrix including adjoining, typically contacting layers (9) of at least one thin, partially structured sheet metal foil (4a) which are formed by matrix channels (3) that extend into a depth of the matrix (2) continuously and terminate in faces (2a, b) of the matrix (2),
wherein starting from at least one of the faces (2a, b) solder is only applied in solder zones (105) extending in the channel orientation (3') wherein the solder zones terminate in strip-shaped solder portions (5) of the at least one face (2a), in that
- a cover plunger (100) is applied tight onto the face (2a) of the matrix (2),
- wherein at least one solder groove (102) is provided in a contact surface (100a) of the cover plunger (100) oriented towards the face (2a) wherein the solder groove is connected with a backside (100b) of the cover plunger (100) through a connecting channel (107),
- wherein the cross-sectional contour of the solder groove (102) extends from an opening of the connecting channel (107) in the solder groove (102) so that the solder groove decreases in size, and
- wherein the carrier is submerged in a tub with solder fluid (103) or adhesion fluid with a cover plunger (100) facing forward wherein the cover plunger is applied to the face (2a).

19. The method according to claim 18,
**characterized in that**
an outer circumference of the tubular element is sealed relative to an inner circumference of the tub container (104) during submersion.

## Revendications

1. Support pour catalyseurs ou séparateurs de particules avec
- une pièce tubulaire (**1**) entourant, s'étendant dans un sens de tube (**1**'),
- une matrice (**2**) remplissant l'espace entre les parois de la pièce tubulaire (**1**), comprenant des couches (**9**) adjacentes, le plus souvent se contactant, de ladite au moins une feuille de tôle (**4**a) mince, structurée en partie, formant des canaux de matrice (**3**) traversables, s'étendant dans la profondeur de la matrice (**2**) et se terminant dans les surfaces frontales (**2**a, b) de la matrice (**2**),
- où les couches (**9**) de ladite au moins une feuille de tôle (**4**a) sont en partie mutuellement soudées à leurs points de contact (**6**), et
- vu dans le sens de la profondeur (**10**), de la verticale sur la surface frontale (**2**a) de la matrice (**2**), dans au moins une surface transversale (**12**) située parallèle à la surface frontale (**2**a) seulement une ou plusieurs régions de brasure (**5**), dont les surfaces sont au total plus petites que la surface transversale (**12**) de la matrice (**2**) sont recouvertes de brasure dans ladite surface transversale (**12**), où
- dans la région transversale toutes les régions de contact entre les feuilles de tôle sont recouvertes de brasure,
- ladite au moins une région de brasure (**5**) est adaptée en forme de bande,
- au moins dans une surface annulaire (**12**b) de la surface transversale (**12**) située entre sa surface centrale (**12**a) et la surface de bord extérieure (**12**c) de cette dernière ladite au moins une région de brasure (**5**) en forme de bande est courbée,
**caractérisé en ce que**
- les conditions définies pour la surface transversale (**12**) sont valables pour au moins 50% de la longueur axiale de la matrice (**2**) mesurée dans le sens du tube (**1'**).

2. Support selon la revendication **1,**
**caractérisé en ce que**
la région de brasure (**5**) en forme de bande comprend plusieurs sections de région de brasure (**5.1, 5.2**) et les différentes sections de région de brasure (**5.1, 5.2**) ne sont pas pliées.

3. Support selon une des revendications **1** ou **2**,
**caractérisé en ce que**
les conditions définies pour la surface transversale (**12**) sont valables pour au moins **75%,** mieux encore pour au moins **90%** de la longueur axiale de la matrice (**2**) mesurée dans le sens du tube (**1'**).

4. Support selon une des revendications précédentes,
**caractérisé en ce que**
la région de brasure (**5**) en forme de bande ou des sections de région de brasure (**5.1, 5.2**) ont une largeur (b) mesurée dans un sens perpendiculaire à son sens d'extension (**5'**) qui correspond
- au maximum à dix fois, mieux au maximum à sept fois, mieux au maximum à cinq fois, mieux au maximum à trois fois la largeur (D) d'une couche (**9**),
ou
- qui est égal à, mieux au moins le double de, mieux au moins trois fois, mieux au moins quatre fois la largeur (D) d'une couche (**9**).

5. Support selon une des revendications précédentes,
**caractérisé en ce que**
l'extension maximale de la surface centrale (**12**a) correspond au maximum
- à huit fois, mieux à cinq fois la largeur (D) d'une couche (**9**).

6. Support selon une des revendications précédentes,
**caractérisé en ce que**
la surface de bord circonférentiel extérieure (**12**c) a une largeur de bord (Rb) transversalement à son sens d'extension qui correspond au maximum
- à huit fois, mieux à cinq fois, mieux à trois fois la largeur (D) d'une couche (9).

7. Support selon une des revendications précédentes,
**caractérisé en ce que**
- plusieurs sections de région de brasure (**5.1, 5.2, 5.3**) de la région de brasure (5) se rejoignent en particulier dans un centre de brasure (**5**.z) commun.

8. Support selon la revendication **7,**
**caractérisé en ce que**
le centre de brasure (**5**.z) se situe
- au centre géométrique (**10**),
- ou au centre de gravité de la surface transversale (**12**),
- ou dans le cas d'une matrice cylindrique (**2**) formée par des feuilles de tôle (**4**a, b) enroulées en spirale, vue dans le sens de profondeur (**10**), au centre d'enroulement (**10**') de la matrice (**2**).

9. Support selon une des revendications précédentes,
**caractérisé en ce que**
- la région de brasure (**5**) en forme de bande ou la région de brasure sans pliure (**5.1**) de la région de brasure (**5**) en forme de bande a le même sens de courbure sur l'ensemble de l'extension,
- dans le cas d'une matrice (**2**) enroulée en spirale le sens de la courbure correspond en particulier au sens de la courbure des couches (**9**) de la matrice (**2**), et
- l'angle intermédiaire (**8**) diminue en particulier depuis l'extrémité intérieure (**5**a) de la région de brasure (**5**) en forme de bande ou depuis la section de région de brasure (**5.1**) vers son extrémité extérieure (**5b**), diminue en particulier progressivement et est en particulier égale à zéro au bord extérieur de la matrice (**2**) ou s'approche de manière asymptomatique du bord extérieur de la matrice (**2**).

10. Support selon une des revendications précédentes,
**caractérisé en ce que**
le sens d'extension (**5'**) de la région de brasure (**5**) en forme de bande ou des sections de région de brasure (**5.1, 5.2**) présente sur au moins **50**%, mieux sur au moins **70**%, mieux sur au moins **80**%, mieux sur au moins **90**% de leur longueur une composante de direction (**5'**x) qui n'est pas parallèle au sens d'extension (**9**') de la couche (**9**) de feuille de tôle (**4**a, b) croisant la région de brasure (**5**) à cet endroit.

11. Support selon une des revendications précédentes,
**caractérisé en ce que**
le sens d'extension (**5'**) de la région de brasure (**5**) en forme de bande par rapport au sens d'extension (**9**') de la couche (**9**) croisant la région de brasure (**5**) à cet endroit présente au moins dans la surface annulaire (**12**b) à au moins un endroit de l'extension de la région de brasure (**5**) un angle plus petit des deux angles intermédiaires (**8**) de
- au moins **10**°, mieux d'au moins **15**°, mieux d'au moins **20**°
ou
- d'au maximum **40**°, mieux d'au maximum **35**°.

12. Support selon une des revendications précédentes,
**caractérisé en ce que**
- il y a un cercle de région de brasure (**5.r**) circonférentiel autour de la circonférence de la matrice (**2**) vue dans le sens de la profondeur (**10**), et
- le cercle de région de brasure (**5.r**) est an particulier connecté à toutes les régions de brasure (**5**) et en particulier à toutes les sections de région de brasure (**5.1 - 5.6**).

13. Support selon une des revendications 1 - 12,
**caractérisé en ce que**
il y a dans la région de bord circonférentiel extérieur du plan radial (**11**') de la matrice (**2**), en particulier de la surface annulaire (**12**b) seulement un segment de cercle de région de brasure (**5.r1**), qui dans le cas d'une matrice (**2**) enroulée en spirale chevauche les extrémités libres du côté extérieur de ladite au moins une couche (**9**) de la matrice (**2**) dans le sens circonférentiel.

14. Support selon une des revendications précédentes, comprenant une surface frontale circulaire (**2**a),
**caractérisé en ce que**
- la matrice (**2**) a la forme d'un cylindre ainsi que des surfaces frontales circulaires (**2**a, b) situées en particulier perpendiculaire au sens de tube (**1**') ou comprend une surface frontale elliptique (**2**a, b) et consiste en au moins une, de préférence deux, feuilles de tôle (**4**a, b) adjacentes, enroulées en spirale autour d'un axe d'enroulement (**10**) et **en ce que** le plan transversal (**11**') est perpendiculaire à l'axe d'enroulement (**10**), et
- un site de contact recouvert de brasure (**6**) est présent dans un corridor (**7**), en particulier dans un corridor (**7**) passant par le centre géométrique (**10**) de la surface transversale (**12**), placé de manière aléatoire, ce corridor ayant une largeur (B) correspondant à quatre fois l'épaisseur (D) d'une couche (**9**), dans au maximum **10**, mieux au maximum sept, mieux au maximum cinq couches (**9**) successives.

15. Support selon une des revendications précédentes,
où la région de brasure (**5**) en forme de bande présente dans une surface transversale (**12**) se poursuit dans le sens du canal (**3**') de manière tridimensionnelle sous la forme d'au moins un espace de recouvrement par brasure (**105**) avec une section transversale sous forme de ladite au moins une région de brasure (**5**), **caractérisé en ce que**
dans le cas d'une matrice (**2**) faite de feuille de tôle ondulée (**2**a) et de feuille de tôle lisse (**2**b) enroulée en commun autour d'un axe d'enroulement (**10**), en particulier en spirale, en particulier chaque espace de recouvrement par brasure (**105**)
- comprend au moins une zone de recouvrement par brasure (**101**) oblongue et s'étendant dans le sens du canal (**3**'),
- qui se trouve respectivement sur au moins un côté de la bande de contact (**6**') s'étendant dans le sens du canal (**3**') entre la feuille de tôle ondulée (**2**a) et la feuille de tôle lisse (**2**b) dans l'interstice (**108**) entre ces deux feuilles de tôle (**4**a, b),
- dans chaque zone de recouvrement par brasure (**101**) il y a des particules de brasure, en particulier des globules de brasure (**99**), adhérant l'un à l'autre et/ou aux feuilles de tôle (**4**a, b), et
- les particules de brasure, en particulier les globules de brasure (**99**) peuvent, en particulier dans une zone de recouvrement par brasure (**101**) être espacés mutuellement dans le sens du canal (**3**').

16. Support selon une des revendications précédentes,
**caractérisé en ce que**
- les zones de recouvrement par brasure (**101**) dans un espace de recouvrement par brasure (**105**) ont des longueurs différentes dans le sens du canal (**3**').

17. Support selon une des revendications précédentes,
**caractérisé en ce que**
la matrice (**2**) comprend des espaces de recouvrement par brasure (**105**) s'étendant des deux surfaces frontales (**2**a, b) et de régions de brasure (**5**) en forme de bande situées là-dedans dans le sens du canal (**3**'), et
- ou les régions de brasure (**5**) présentes aux deux surfaces frontales (**2**a, b) sont arrangées de manière coïncidente vues dans le sens de la profondeur (**10**), et où les espaces de recouvrement par brasure (**105**) s'étendant à partir de ces dernières ne s'étendent pas jusqu'au centre de la profondeur de la matrice (**2**) dans le sens de la profondeur (**10**)
- ou, les régions de brasure (**5**) en forme de bande arrangées aux deux surfaces frontales (**2**a, b) ne se croisent pas, vues dans le sens de la profondeur (**10**), et les espaces de recouvrement par brasure (**105**) s'étendant des régions de brasure (**5**) sur les deux côtés dans le sens de la profondeur (**10**) au centre de la de la matrice (**2**) se chevauchent dans le sens de la profondeur (**10**).

18. **Procédé** pour le recouvrement partiel par brasure d'un support selon une des revendications précédentes pour catalyseurs ou séparateurs de particules avec
- une pièce tubulaire (**1**) entourant,
- une matrice (**2**) remplissant l'espace entre les parois de la pièce tubulaire (**1**), comprenant des couches (**9**) adjacentes, souvent se contactant, de ladite au moins une feuille de tôle (**4**a) mince, structurée en partie, formant des canaux de matrice (**3**) traversables, s'étendant dans la profondeur de la matrice (**2**) et se terminant dans les surfaces frontales (**2**a, b) de la matrice (**2**),
où on recouvre par brasure partant d'au moins une des surfaces frontales (**2**a, b) seulement dans des zones de recouvrement par brasure (**105**) s'étendant dans le sens des canaux (**3**') qui se terminent dans des régions de brasure (**5**) en forme de bande sur ladite au moins une surface frontale (**2**a), tout en
- pressant une étampe de recouvrement (**100**) de manière étanche sur la surface frontale (**2**a) de la matrice (**2**),
- où dans la surface de contact (**100**a) orientée vers sa surface frontale (**2**a) au moins une rainure de brasure (**102**) est présente qui est en communication avec la face arrière de l'étampe de recouvrement (**100**) via un canaux de liaison (**107**),
- où le contour de section de la rainure de brasure (**102**) est adapté diminuant dans le sens de son extension de l'entrée du canal de liaison (**107**) dans la rainure de brasure (**102**), et
- le support est immergé dans un bain de fluide de brasure (**103**) ou de fluide d'adhérence avec en avant l'étampe de recouvrement (**100**) mise sur la surface frontale (**2**a).

19. Procédé selon la revendication **18**,
**caractérisé en ce que**
pendant l'immersion la circonférence de la pièce tubulaire (**1**) est maintenue étanche envers la circonférence intérieure du conteneur de bain (**104**).
